Europäisches Patentamt

European Patent Office

Office européen des brevets

(19)

(11) EP 0 609 137 B1

(12) **FASCICULE DE BREVET EUROPEEN**

(45) Date de publication et mention
de la délivrance du brevet:
**08.03.2000 Bulletin 2000/10**

(51) Int Cl.⁷: **H04Q 11/04**

(21) Numéro de dépôt: **94400155.1**

(22) Date de dépôt: **25.01.1994**

(54) **Dispositif pour l'échange de format entre voies numériques synchrones et asynchrones**

Umwandlungsvorrichtung zwischen Asynchronen- und Synchronen Übertragungsverfahren

Device for cross-mapping between synchronous and asynchronous transmission formats

(84) Etats contractants désignés:
**AT BE CH DE ES FR GB IT LI NL SE**

(30) Priorité: **29.01.1993 FR 9300955**

(43) Date de publication de la demande:
**03.08.1994 Bulletin 1994/31**

(73) Titulaire: **ALCATEL**
**75008 Paris (FR)**

(72) Inventeurs:
• **Dieudonné, Marc**
**F-91430 Igny (FR)**

• **Glon, Jean-Pierre**
**F-78380 Bougival (FR)**

(74) Mandataire: **Sciaux, Edmond et al**
**COMPAGNIE FINANCIERE ALCATEL**
**Dépt. Propr. Industrielle,**
**30, avenue Kléber**
**75116 Paris (FR)**

(56) Documents cités:
**EP-A- 0 488 399      FR-A- 2 655 794**

• **ELECTRICAL COMMUNICATION vol. 65, no. 1 , 1991 , BRUSSELS BE pages 19 - 21 'Evolution of Alcatel Exchanges'**

## Description

L'invention concerne : un dispositif de cellulisation de voies numériques synchrones, un dispositif de décellulisation de voies numériques synchrones, un centre de commutation de voies numériques synchrones comportant de tels dispositifs de cellulisation et de décellulisation, et un centre de commutation de voies numériques asynchrones permettant d'acheminer vers d'autres centres de commutation des cellules produites par un tel dispositif de cellulisation.

Dans un réseau synchrone, les voies numériques sont supportées par des multiplex synchrones, ayant un débit de 2,048 Mbits/s par exemple, organisés en trames récurrentes ayant une période de trame fixée, et qui sont découpées en intervalles de temps ayant des durées fixées. Un échantillon de chaque voie synchrone est représenté par un mot binaire placé dans un intervalle de temps occupant une position fixe dans la trame. Dans un réseau asynchrone, des informations binaires d'une voie logique sont supportées par des paquets à mode de transfert asynchrone, appelés cellules, ayant une longueur fixée et comportant une en-tête identifiant la voie logique supportée par la cellule.

En l'état actuel de l'art, tel que connu par exemple de la demande EP-A-0 488 399, les réseaux de télécommunication synchrones sont nettement séparés des réseaux asynchrones. Lorsqu'un réseau asynchrone a besoin de services classiques disponibles dans un réseau de télécommunication synchrone, il utilise une passerelle placée entre ces deux réseaux.

Une passerelle réalise une cellulisation qui consiste à placer dans une cellule support d'une voie logique, des mots binaires représentant chacun un échantillon d'une voie synchrone, afin de pouvoir transmettre ces informations du réseau synchrone vers le réseau asynchrone. La passerelle réalise aussi une décellulisation consistant à extraire de chaque cellule reçue par la passerelle des mots binaires correspondant chacun à un échantillon d'une voie synchrone, et à reconstituer un multiplex temporel synchrone organisé en trames récurrentes ayant une période fixée, chaque trame étant constituée d'intervalles de temps supportant respectivement des voies synchrones différentes. La passerelle place dans ces intervalles de temps les mots binaires correspondant respectivement à ces voies synchrones.

En Europe, les voies numériques synchrones sont supportées par des multiplex synchrones ayant un débit de 2,048 Mbits/s, organisés en trames récurrentes ayant une période de 125 microsecondes. Chaque trame est découpée en 32 intervalles de temps supportant chacun un octet correspondant à une voie ayant un débit de 64 Kb/s. Selon le format normalisé, chaque cellule de transfert asynchrone comporte 5 octets d'en-tête et 48 octets de charge utile. Le dispositif de cellulisation d'une passerelle pourrait donc constituer chaque cellule en plaçant dans celle-ci 48 octets représentant 48 échantillons successifs d'une même voie synchrone. En fait, le dispositif de cellulisation utilisé dans une telle passerelle ne place, par exemple, que deux octets appartenant à une même voie, ce qui correspond à une durée de cellulisation de 0,25 ms, car l'avis Q551 du CCITT limite le délai de traversée aller-retour dans un réseau synchrone à 1 ms. Le dispositif de cellulisation et de décellulisation d'une telle passerelle provoque donc un délai total de 0,5 ms qui respecte les prescriptions de l'avis Q551, mais qui conduit à un gaspillage des ressources puisque chaque cellule comporte 46 octets non employés.

Le développement des centres de commutation à mode de transfert asynchrone permet d'envisager maintenant leur utilisation à l'intérieur même des réseaux synchrones, dans le but de constituer pour un faible coût des centres de commutation de voies synchrones. En effet, le débit extrêmement élevé des multiplex asynchrones traités par les réseaux de connexion asynchrones permet d'envisager de commuter un très grand nombre de voies synchrones avec un matériel beaucoup plus réduit que celui utilisé classiquement dans un centre de commutation de voies synchrones. Il se pose donc le problème de convertir les voies synchrones en voies asynchrones; et, après la commutation, de reconvertir les voies asynchrones en voies synchrones. Le dispositif de cellulisation connu qui est utilisé dans le type de passerelle mentionné ci-dessus ne convient pas pour cette application, à cause du gaspillage de ressources que constitue le très faible remplissage de chaque cellule produite par un tel dispositif de cellulisation.

Le document intercalaire WO 94/11975, publié le 26 mai 1994, décrit un dispositif de cellulisation de voies numériques synchrones, dans des cellules de transfert en mode asynchrone, ces voies synchrones étant supportées par des multiplex synchrones organisés en trames récurrentes ayant une période de trame fixée et qui sont découpées en intervalles de temps ayant des durées fixées. Un échantillon de chaque voie est représenté par un mot binaire placé dans un intervalle de temps occupant une position fixe dans la trame. Ce dispositif comporte des moyens pour placer dans une même cellule, support d'une voie logique, des mots binaires représentant respectivement une pluralité de voies synchrones différentes, susceptibles d'être supportées par cette voie logique.

Il ne perd pas de temps à attendre les mots binaires correspondant à plusieurs échantillons successifs d'une même voie. Il place dans une même cellule des mots binaires disponibles au cours d'une même période de trame mais représentant des échantillons de voies différentes. Il permet ainsi un remplissage de chaque cellule beaucoup plus important, puisque le remplissage d'une cellule peut atteindre jusqu'à 100%, si au cours de la période de trame considérée, il y a suffisamment de voies synchrones susceptibles d'être acheminées par la voie logique supportée par la cellule considérée.

Le but de l'invention est de proposer une structure particulière pour ce dispositif de cellulisation, et une structure particuliére pour ce dispositif de décellulisation.

Un premier objet de l'invention est un dispositif de cellulisation de voies numériques synchrones, dans des cellules à mode de transfert asynchrone, ces voies synchrones étant supportées par des multiplex synchrones organisés en trames récurrentes ayant une période de trame fixée, et ces trames étant découpées en intervalles de temps ayant des durées fixées, un échantillon de chaque voie étant représenté par un mot binaire placé dans un intervalle de temps occupant une position fixe dans la trame, ces cellules supportant des mots binaires représentant respectivement une pluralité de voies asynchrones différentes ; caractérisé en ce que ledit dispositif de cellulisation comporte :

- une mémoire d'entrée pour stocker les échantillons de toutes les voies synchrones de chaque trame, au fur et à mesure qu'ils sont reçus ;
- des mémoires de formation de cellules, qui est lue séquentiellement pour fournir restituer séquentiellement les cellules à des multiplex asynchrones ;
- une mémoire d'identificateurs de cellule pour mémoriser, pour chaque cellule, au moins :

  -- une en-tête de cellule attribuée à cette cellule ;
  -- un mot indiquant sur quel multiplex asynchrone cette cellule doit être restituée ;
  -- une adresse initiale de lecture ;
  -- une adresse d'écriture ;

- une mémoire de marquage contenant des informations de marquage relatives à la répartition des voies synchrones dans les voies logiques asynchrones ; ces informations étant sous la forme d'une liste de liens ; ladite mémoire de marquage étant lue à une adresse initiale de lecture fournie par la mémoire d'identificateurs de cellules, pour fournir une nouvelle adresse de lecture dans cette mémoire d'entrée ; la mémoire de marquage ayant un nombre de pages égal au nombre maximal des cellules qui peuvent être transmises pendant une période de trame, et chaque page correspondant aux octets de charge utile d'une cellule ;
- un circuit de commande pour transmettre des octets de la mémoire d'entrée vers l'une de ces mémoires de formation de cellules, à des adresses d'écriture qui sont fournies par la mémoire d'identificateurs de cellule.

Selon un mode de réalisation particulier, pour commuter et assembler des voies numériques synchrones dans des cellules de longueur fixe, le dispositif de cellulisation selon l'invention est caractérisé en ce que le circuit de commande transmet un nombre fixe d'octets de la mémoire d'entrée aux mémoires de formation de cellules, pour former chaque cellule dans ces mémoires de formation de cellules.

Selon un mode de réalisation particulier, pour commuter et assembler des voies numériques synchrones dans des cellules de longueur variable, le dispositif de cellulisation selon l'invention est caractérisé :

- en ce qu'il comporte des moyens pour déterminer la longueur de chaque cellule, et des données de routage, en fonction du trafic à acheminer ;
- le circuit de commande transmet un nombre d'octets, correspondant à la longueur déterminée pour une cellule, de la mémoire d'entrée aux mémoires de formation de cellules, pour former cette cellule dans les mémoires de formation de cellules.

Un deuxième objet de l'invention est un dispositif de décellulisation de voies numériques synchrones placées dans des cellules à mode de transfert asynchrone, ces cellules supportant des mots binaires représentant respectivement des échantillons d'une pluralité de voies asynchrones différentes ; caractérisé en ce qu'il comporte :

- une mémoire d'entrée pour stocker toutes les cellules reçues en provenance de voies multiplex asynchrones ;
- des moyens pour vérifier l'identité de chaque cellule reçue, et en déduire un adresse d'écriture pour cette identité, si cette cellule était attendue, ou pour éliminer l'identité de cette cellule si elle a été reçue à cause d'une erreur ;
- des mémoires de formation de trames, fournissant respectivement des trames aux multiplex synchrones, lorsqu'elles sont lues séquentiellement ;
- une mémoire d'identificateurs de cellules pour mémoriser, pour chaque cellule reçue, et à l'adresse d'écriture fournie par les moyens pour vérifier l'identité , au moins :

  -- une adresse de page correspondant à cette cellule reçue,
  -- et une adresse de ligne initiale dans cette page ;

- une mémoire de marquage contenant des informations de marquage relative à la répartition des voies synchrones dans les trames synchrones ; ces informations étant sous la forme de listes de liens ; cette mémoire de marquage étant lue à une adresse de ligne initiale fournie par la mémoire d'identificateurs de cellule, puis à une adresse de lecture fournie par elle-même ; et cette mémoire de marquage fournissant une adresse d'écriture ;
- des moyens de commande pour lire chaque octet de la charge utile d'une cellule, dans la mémoire d'entrée, dans l'ordre d'arrivée des cellules, et ensuite l'écrire dans la mémoire de formation de trames à l'adresse d'écriture fournie par la mémoire de marquage.

Selon un mode de réalisation particulier, pour désassembler et commuter des voies numériques synchrones placées dans des cellules à longueur fixe, chaque cellule comportant un identificateur de groupe de circuits virtuels et un identificateur de circuit virtuel, le dispositif de décellulisation selon l'invention est caractérisé en ce que les moyens pour vérifier l'identité de chaque cellule prélèvent l'identificateur de groupe de circuits virtuels et l'identificateur de circuit virtuel de chaque cellule reçue, et en déduisent une adresse d'écriture dans la mémoire de la mémoire d'identificateurs de cellules.

Selon un mode de réalisation particulier, pour désassembler et commuter des voies numériques synchrones placées dans des cellules à longueur variable, chaque cellule comportant une étiquette de routage et un indicateur indiquant sa longueur, le dispositif de décellulisation selon l'invention est caractérisé en ce que la mémoire d'entrée comporte des moyens pour déterminer la fin de chaque cellule, et pour stocker les cellules bout à bout ; et en ce que les moyens pour vérifier l'identité de chaque cellule reçue reçoivent des données de routage correspondant à chaque cellule, et déterminent une adresse d'écriture dans la mémoire d'identificateurs de cellules en fonction de la voie logique correspondant à ces données de routage.

Un troisième objet de l'invention est un centre de commutation de voies numériques synchrones, ces voies synchrones étant supportées par des multiplex synchrones organisés en trames récurrentes ayant une période de trame fixée, et étant découpées en intervalles de temps ayant des durées fixées, un échantillon de chaque voie étant représenté par un mot binaire placé dans un intervalle de temps occupant une position fixe dans la trame; caractérisé en ce qu'il comporte :

- des unités de raccordement de multiplex synchrones entrants comportant un dispositif de cellulisation selon l'invention ;
- des unités de raccordement de multiplex synchrones sortants, comportant chacune un dispositif de décellulisation selon l'invention ;
- un réseau de connexion à mode de transfert asynchrone, établissant des connexions entre les unités de raccordement de multiplex synchrones entrants et les unités de raccordement de multiplex synchrones sortants, pour acheminer les cellules supportant les voies asynchrones.

Le centre de commutation ainsi caractérisé est vu de l'extérieur comme un centre de commutation synchrone, il présente donc l'avantage d'être intégrable dans un réseau synchrone, comme n'importe quel centre de commutation classique synchrone, mais il a un coût de réalisation très inférieur parce que le coeur du centre de commutation est un réseau de connexion à mode de transfert asynchrone commutant des circuits dont le débit est beaucoup plus élevé que le débit des circuits commutés par un réseau de connexion synchrone.

Un quatrième objet de l'invention est un centre de commutation de voies numériques asynchrones, permettant d'acheminer vers d'autres centres de commutation des cellules produites par un dispositif de cellulisation, selon l'invention, ces cellules supportant des mots binaires représentant respectivement une pluralité de voies asynchrones différentes; ce centre de commutation comportant un réseau de connexion à mode de transfert asynchrone, muni de plusieurs accès pour des voies numériques asynchrones;

et étant caractérisé en ce qu'il comporte, relié à l'un de ses accès, des moyens pour :

- recevoir des cellules supportant des mots binaires représentant respectivement une pluralité de voies synchrones différentes ;
- extraire de ces cellules les mots binaires qu'elles supportent;
- et placer dans plusieurs cellules distinctes supportant des voies logiques distinctes les mots binaires extraits représentant respectivement des échantillons de voies synchrones différentes qui ne sont pas susceptibles d'être supportées par une même voie logique.

Le centre de commutation ainsi caractérisé permet d'acheminer au travers d'un réseau de télécommunication asynchrone des cellules produites par des dispositifs de cellulisation selon l'invention, et permet donc d'acheminer des informations en provenance de voies synchrones, en conservant autant que possible l'efficacité de remplissage que procure le dispositif de cellulisation selon l'invention, tout le long du trajet où les voies synchrones différentes sont encore susceptibles d'être supportées par une même voie logique.

L'invention sera mieux comprise et d'autres détails apparaîtront à l'aide de la description ci-dessous et des figures l'accompagnant :

- la figure 1 représente schématiquement une cellule dite composite, produite par un dispositif de cellulisation, selon l'invention;
- la figure 2 représente le schéma synoptique d'un premier exemple de réalisation d'un centre de commutation de voies numériques synchrones, selon l'invention;
- la figure 3 illustre le fonctionnement de cet exemple de réalisation pour un exemple de voies synchrones, et pour une période de trame donnée;
- la figure 4 représente le schéma synoptique commun à un premier et à un second exemple de réalisation du dispositif de cellulisation, selon l'invention, respectivement pour des cellules à longueur fixe et des cellules à longueur variable;

- la figure 5 représente un chronogramme illustrant le fonctionnement de cet exemple de réalisation;
- la figure 6 représente le schéma synoptique commun à un premier et à un second exemple de réalisation du dispositif de décellulisation, selon l'invention, respectivement pour des cellules à longueur fixe et des cellules à longueur variable;
- la figure 7 représente un chronogramme illustrant le fonctionnement de cet exemple de réalisation;
- la figure 8 représente le schéma synoptique de moyens à rajouter à un dispositif de cellulisation selon l'invention, pour permettre un test de continuité des voies synchrones;
- la figure 9 représente le schéma synoptique de moyens supplémentaires à rajouter à un dispositif de décellulisation selon l'invention, pour réaliser le test de continuité; ces moyens supplémentaires permettent en outre de réaliser un réarrangement des voies synchrones dans les cellules;
- la figure 10 représente le schéma synoptique d'un exemple de réalisation du centre de commutation de voies numériques asynchrones, selon l'invention;
- la figure 11 illustre le fonctionnement de cet exemple de réalisation;
- la figure 12 représente le schéma synoptique d'un second exemple de réalisation du dispositif de cellulisation selon l'invention, destiné à être utilisé dans le centre de commutation représenté sur la figure 10;
- la figure 13 représente le schéma synoptique d'un second exemple de réalisation du dispositif de décellulisation selon l'invention.

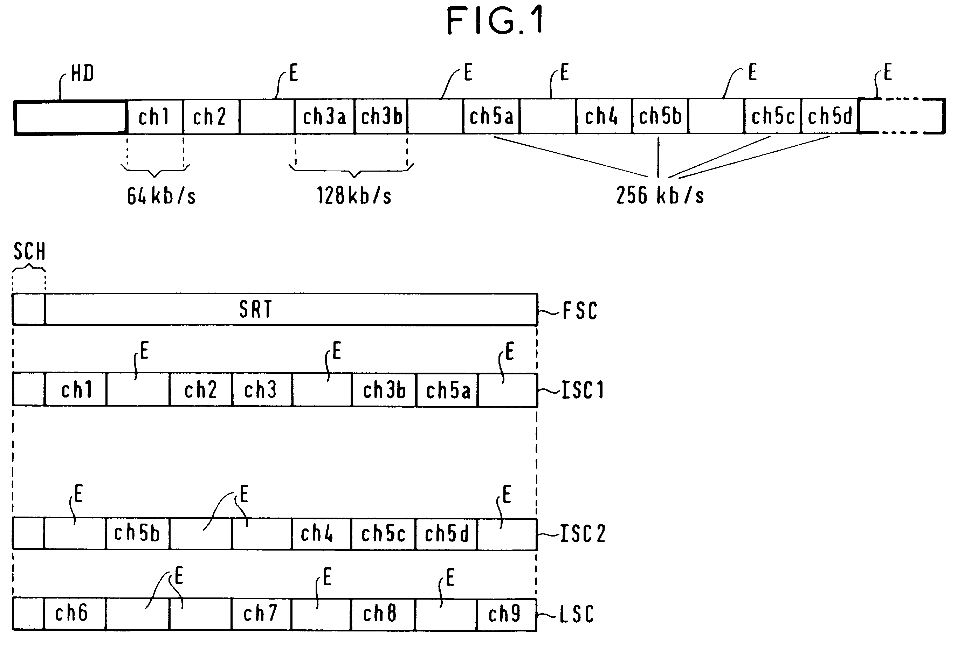

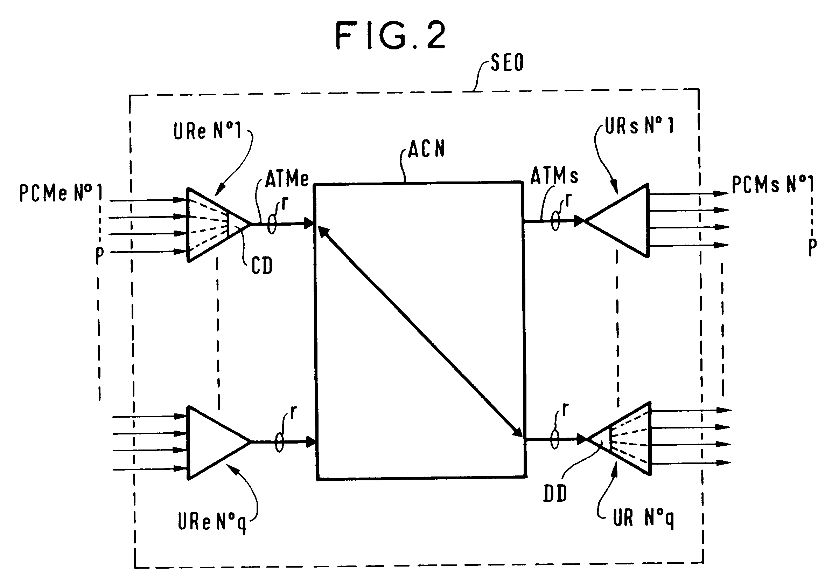

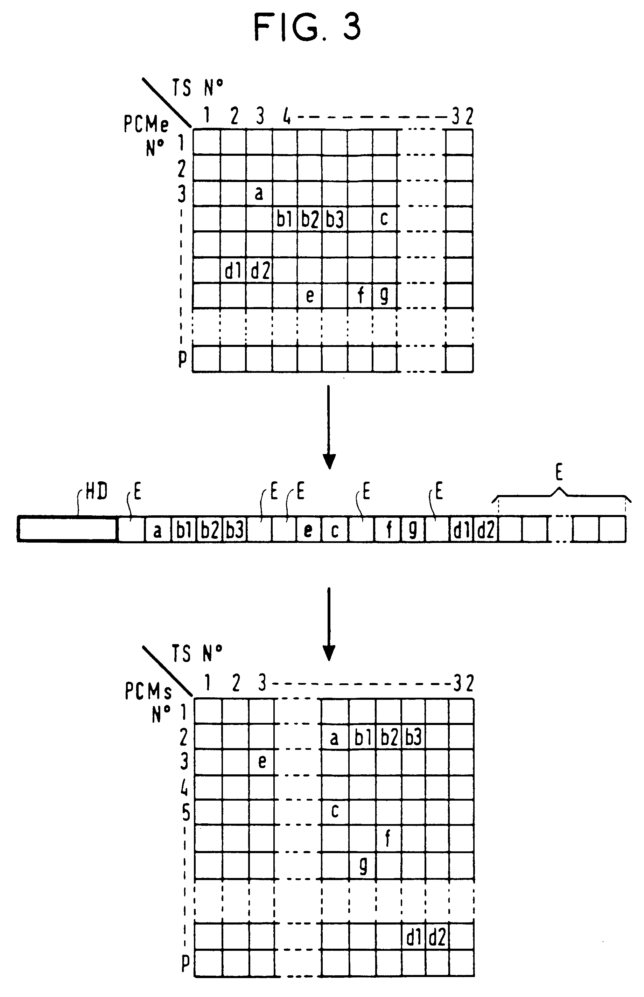

Un dispositif de cellulisation de voies numériques synchrones, selon l'invention, fournit des cellules composites telles que celles représentées sur la figure 1 à titre d'exemple.

La partie supérieure de la figure 1 représente une cellule composite à longueur fixe. Cette cellule comporte une en-tête HD constituée de cinq octets, et une charge utile constituée de 48 octets, conformément à la norme du CCITT concernant les cellules à mode de transfert asynchrone. Cette cellule transporte des octets représentant respectivement des échantillons de cinq voies synchrones différentes : un octet ch1 d'une première voie ayant un débit de 64 Kb/s, un octet ch2 d'une deuxième voie ayant un débit de 64 kb/s, deux octets ch3a,ch3b d'une troisième voie dont le débit binaire total est de 128 kb/s, un octet ch4 d'une quatrième voie ayant un débit de 64 kb/s, quatre octets ch5a, ch5b, c5c, ch5d d'une cinquième voie ayant un débit binaire de 256 Kb/s, et des octets vides référencés E. Ces octets vides E sont répartis aléatoirement dans la cellule et correspondent à des voies qui ont été libérées à la fin d'une communication.

Une voie peut avoir un débit binaire égal N x 64 Kb/s, N pouvant prendre toutes les valeurs de 1 à 32. Eventuellement n octets de la charge utile de chaque cellule composite peuvent être réservés pour transmettre un code de contrôle d'erreur par redondance cyclique.

Lorsqu'une communication va être établie, et qu'une voie supplémentaire est à transmettre dans une telle cellule, l'octet ou les octets représentant un échantillon ou des échantillons de cette voie sont placés dans cette cellule en utilisant les emplacements des octets E qui sont vides à l'instant considéré. Lorsqu'un échantillon d'une voie est représenté par plusieurs octets, comme c'est le cas pour les quatre octets ch5a, ch5b, cH5c, c5d, ces octets sont placés dans des emplacements d'octets vides E qui ne sont pas forcément consécutifs. C'est pourquoi, dans cet exemple, deux octets disponibles E et un octet ch4 correspondant à un échantillon de la quatrième voie se trouvent intercalés entre les octets de la cinquième voie. Ce placement est réalisé en respectant l'ordre chronologique des échantillons de chaque voie synchrone.

La partie inférieure de la figure 1 représente une cellule composite ayant une longueur variable en fonction du nombre de voies synchrones ayant la destination correspondant à la voie logique dont fait partie cette cellule. Cette cellule comporte, dans chaque segment, 8 octets de charge utile et une en-tête SCH de 4 bits de contrôle permettant notamment de distinguer :

- un premier segment FSC;
- des segments intermédiaires ISC1, ISC2;
- et un dernier segment LSC.

Le premier segment, FSC, transporte uniquement une étiquette d'auto-acheminement SRT. Les autres segments transportent, par exemple, des échantillons de neuf voies synchrones différentes, ch1, ch2, ch3a, ch3b, ch4, ch5a, ch5b, ch5c, ch5d, ch6, ch7, ch8, ch9, et des octets vides E. Les voies ch1 à ch5 sont identiques à celles décrites ci-dessus et les voies ch6 à ch9 ont un débit de 64 Kbits/s. Les octets vides E sont répartis aléatoirement dans la cellule et correspondent à des voies qui ont été libérées à la fin d'une communication. Le nombre total de segments par cellule est limité à 8, par exemple, pour optimiser les performances des centres de commutation. Lorsqu'une cellule vide est émise, elle ne comporte que le premier segment FSC.

Une cellule au format normalisé peut facilement être convertie en une cellule constituée de huit segments : le premier contient l'étiquette d'acheminement SRT; le deuxième contient trois octets disponibles et les cinq octets de l'en-tête de la cellule au format normalisé; et les six autres contiennent les quarante huit octets de données de la cellule au format normalisé.

Les trois octets disponibles dans le deuxième segment sont utilisés notamment pour :

- indiquer la longueur de la cellule par un champ de trois bits;

- détecter les erreurs affectant la charge utile de la cellule, par trois bits de code de redondance cyclique;
- détecter les erreurs sur ces six bits, par un septième bit, qui est un bit de parité.

La figure 2 représente le schéma synoptique d'un exemple de réalisation SE0 du centre de commutation de voies numériques synchrones, selon l'invention. Ce centre de commutation comporte des dispositifs de cellulisation et des dispositifs de décellulisation selon l'invention. Ce centre de commutation comporte :

- q unités de raccordement URe, chacune pour raccorder p multiplex synchrones entrants, référencés PCMe n°1..., p;
- un réseau de connexion, ACN, à mode de transfert asynchrone;
- q unités de raccordement URs, chacune pour raccorder p multiplex synchrones sortants référencés PCMs n°1..., p.

Chaque unité de raccordement URe est reliée au réseau de connexion ACN par r multiplex asynchrones référencés ATMe. Chaque unité de raccordement URs est reliée au réseau de connexion ACN par r multiplex asynchrones référencés ATMs.

Le réseau de connexion ACN permet d'acheminer une cellule à partir de n'importe lequel des multiplex asychrones entrants ATMe vers n'importe lequel des multiplex asynchrones sortants ATMs et de traduire, dans l'en-tête de chaque cellule, l'identité de la voie logique supportée par cette cellule. La structure et le fonctionnement du réseau de connexion ACN sont tout à fait classiques. En particulier, il respecte l'ordre chronologique des cellules.

La structure d'une unité de raccordement URe comporte des interfaces de ligne identiques à celles que comporte une unité de raccordement classique pour raccorder des multiplex synchrones entrant dans un réseau de connexion à mode de transfert synchrone, et une partie nouvelle qui est constituée par un dispositif de cellulisation selon l'invention, CD, qui sera décrit plus loin. La structure de chaque unité de raccordement URs comporte des interfaces de ligne identiques à celles que comporte une unité de raccordement classique pour raccorder des multiplex synchrones sortant d'un réseau de connexion à mode de transfer synchrone, et une partie nouvelle qui est constituée d'un dispositif de décellulisation selon l'invention, DD, qui sera décrit plus loin.

Les dispositifs de cellulisation CD et les dispositifs de décellulisation DD traitent des cellules à longueur fixe ou des cellules à longueur variable, selon le type du réseau de connexion ACN.

La figure 3 illustre le fonctionnement de l'exemple de réalisation représenté sur la figure 2, en montrant l'opération de cellulisation d'octets a, b1, b2, b3, c, d1, d2, e, f, g qui représentent respectivement des échantillons de voies synchrones différentes qui arrivent sur des multiplex synchrones entrants PCMe différents, n°1,..., p sur la première unité de raccordement URe et qui doivent être acheminés vers des multiplex synchrones sortants PCMs n°1,..., ..., p sortant tous d'une même unité de raccordement URs, l'unité n°q par exemple. Tous ces octets ont donc pour caractéristique de pouvoir être acheminés par une même voie logique reliant l'unité URe n°1 à l'unité URs n°q. Les autres octets qui n'ont pas cette caractéristique ne sont pas représentés sur cette figure.

La cellule composite considérée est une cellule à longueur fixe. Le traitement d'une cellule à longueur variable serait identique, en ce qui concerne les opérations décrites ci-dessous.

Le dispositif de cellulisation de l'unité de raccordement URe n°1 forme une cellule composite comportant: une en-tête HD contenant notamment un identificateur identifiant cette voie logique; une charge utile constituée des octets a, b1, b2, b3, e, c, f, g, d1, d2; et des octets vides E. Cette cellule est acheminée par l'un des multiplex asynchrones ATMe jusqu'à une entrée du réseau de connexion ACN. Le réseau ACN restitue cette cellule composite, avec une nouvelle identité de voie logique dans son en-tête, sur l'un des multiplex asynchrones ATMs reliant ce réseau à l'unité de raccordement URs n°q.

Le dispositif de décellulisation de l'unité de racccordement URs n°q extrait les octets a, b1, b2, b3 de la cellule composite et les insère dans des intervalles de temps de la trame du multiplex sychrone PCMs n°2 par exemple; extrait l'octet e de la cellule composite et l'insère dans un intervalle de temps de la trame du multiplex synchrone PCMs n°3; extrait l'octet c de la cellule composite et l'insère dans un intervalle temporel de la trame du multiplex synchrone PCMs n°5; etc. Les intervalles de temps TS des trames synchrones PCMs sont prédéterminés par une opération dite de marquage réalisée au cours d'une phase préalable à l'établissement de chaque communication.

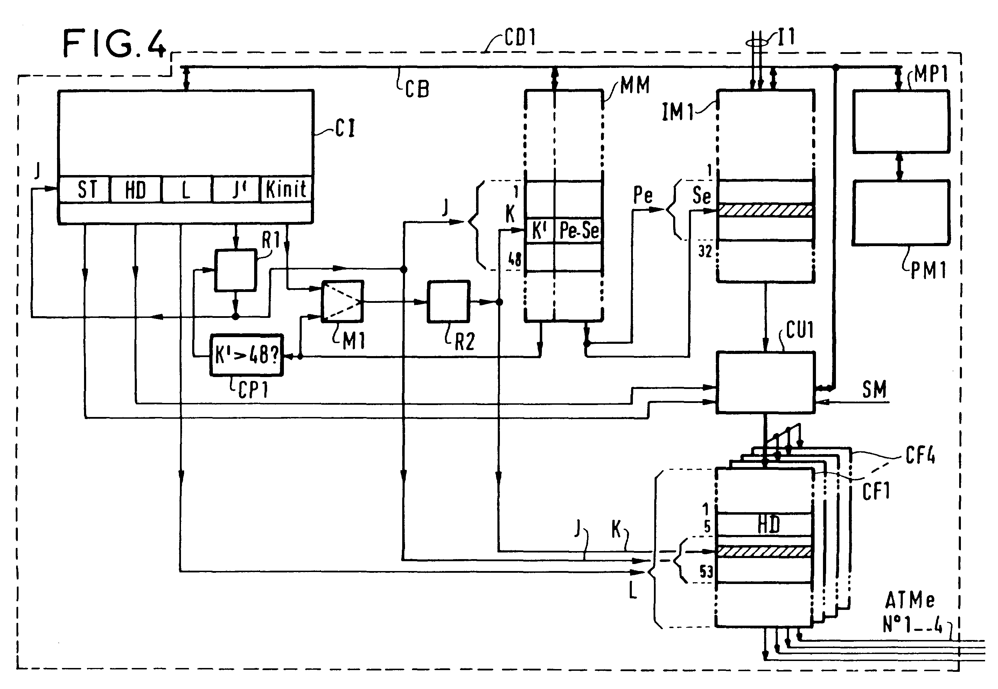

La figure 4 représente le schéma synoptique d'un premier exemple de réalisation CD1 du dispositif de cellulisation selon l'invention qui peut être utilisé dans les unités de raccordement URe n°1, ..., q, pour fournir des cellules de longueur fixe. Ce premier exemple de réalisation comporte :

- une entrée I1 recevant deux multiplex temporels synchrones ayant chacun un débit de 2,048 Mbits/S, c'est-à-dire un total de 64 octets par période de 125 micro-secondes;
- une sortie fournissant quatre multiplex asynchrones ATMe n°1, ..., n°4, chaque multiplex pouvant comporter jusqu'à 32 cellules par période de 125 micro-secondes;
- une mémoire IM1, appellée mémoire d'entrée, ayant une capacité correspondant à 2048 octets;

- une mémoire CI, appellée mémoire d'identités de cellules, comportant un nombre de lignes égal au nombre (128) de cellules pouvant être émises sur l'ensemble des multiplex ATMe n°1, ..., 4, pendant une période de trame, chaque ligne comportant : un champ ST codé sur 2 bits, indiquant l'état d'une cellule à émettre; un champ HD codé sur cinq octets, contenant l'en-tête de cette cellule à émettre; un champ L codé sur deux bits, indiquant sur quel multiplex ATMe cette cellule doit être émise; un champ J' codé sur sept bits et un champ Kinit codé sur six bits, dont les fonctions respectives seront décrites plus loin;
- une mémoire MM, appellée mémoire de marquage, comportant un nombre de pages (128) égal au nombre maximal de cellules à émettre pendant une période de trame, chaque page comportant 48 lignes correspondant aux 48 octets de charge utile d'une cellule, chaque ligne comportant : un premier champ K', dont la fonction sera décrite plus loin; et un second champ Pe-Se qui définit l'adresse d'un mot binaire représentant un échantillon, dans la mémoire d'entrée IM1;
- quatre mémoires identiques CF1, ..., CF4 appelées mémoires de formation de cellules, ayant chacune une capacité correspondant à 32 cellules, c'est-à-dire 1696 octets, pour former jusqu'à 128 cellules par période de trame;
- un circuit de commande CU1, pour commander les mémoires CF1, ..., CF4;
- un microprocesseur MP associé à une mémoire de programme PM et relié aux mémoires CI, MM, IM, et au circuit CU1 par un bus de commande CB;
- deux registres R1 et R2;
- un multiplexeur M1, à deux entrées et 1 sortie;
- un comparateur CP1.

Les mémoires CF1, ..., CF4 de formation des cellules possèdent chacune une sortie constituant l'une des sorties du dispositif de cellulisation, fournissant les multiplex asynchrones ATMe n°1, ..., n°4. Ces mémoires possèdent chacune :

- une entrée de sélection reliée à une sortie de la mémoire d'identités de cellules, CI, pour recevoir un mot binaire L sélectionnant l'une de ces mémoires CF1, ..., CF4;
- une entrée d'adresse de sélection de page, reliée à la sortie du registre R1 pour recevoir un mot binaire J sélectionnant une page contenant les 53 octets constituant une cellule à émettre;
- une entrée d'adresse d'octet reliée à la sortie du registre R2 pour recevoir un mot binaire K, pour l'écriture d'un octet.

Chacune des mémoires CF1, ..., CF4 possèdent une entrée de données reliée à une sortie de l'unité de commande CU1 pour recevoir un octet à inscrire dans l'une de ces mémoires, à un emplacement sélectionné par les mots binaires L, J, K. Le contenu de chacune des mémoires CF1, ..., CF4 est lu séquentiellement de l'adresse 1 à l'adresse 1696 pour émettre successivement 32 cellules pendant chaque période de trame, de durée égale à 125 micro-secondes. Les moyens de commande de lecture des mémoires CF1, ..., CF4, et les moyens pour émettre des cellules vides, le cas échéant, peuvent être incorporés à l'unité de commande CU1. Ils ne sont pas représentés plus en détail, pour clarifier la figure.

L'unité de commande CU1 possède : une entrée-sortie reliée au bus de commande CB; une entrée reliée à une sortie de la mémoire d'entrée IM1, pour recevoir un octet représentant un échantillon d'une voie synchrone; et deux entrées reliées respectivement à deux sorties de la mémoire d'identités de cellules, CI, pour recevoir respectivement une en-tête de cellule HD, et un mot binaire ST indiquant l'état d'une cellule à émettre. Le mot ST peut prendre les valeurs suivantes :

- OO si la cellule est active pour la commutation, le format de la cellule étant alors décrit par le contenu de la mémoire de marquage MM;
- O1 si la cellule est inactive pour la commutation, l'intervalle de temps correspondant à cette cellule pouvant être utilisé alors pour émettre une cellule de signalisation interne dont les données sont lues dans une mémoire SM analogue à la mémoire d'entrée IM, qui n'est pas représentée sur la figure, et qui est reliée à une entrée de l'unité de commande CU1;
- 1O si la connexion à emprunter par la cellule est en cours d'établissement.

L'en-tête HD est classique elle comporte notamment un champ identificateur de faisceau virtuel qui est constitué par le numéro de l'unité de raccordement sortante, URs, qui est destinataire de la cellule; et un champ identificateur de circuit virtuel qui est constitué par le numéro d'une voie logique reliant une unité de raccordement entrante URe à une unité de raccordement sortante URs.

L'inscription des données dans la mémoire d'identités de cellules, CI, est réalisée par des moyens d'écriture qui ne sont pas représentés et qui comportent notamment des moyens de gestion des adresses disponibles, pour réutiliser chaque ligne qui est libérée après l'émission d'une cellule.

La mémoire d'entrée IM1 possède une entrée de données reliée à l'entrée I1 du dispositif de cellulisation D1, une entrée-sortie de commande reliée au bus de commande CB, et une entrée d'adresse de lecture reliée à une sortie de la mémoire de marquage MM pour recevoir une adresse de page Pe et une adresse de ligne Se permettant de lire un octet correspondant à un intervalle de temps donné dans une trame synchrone donnée. Chaque page de la mémoire IM1 stocke 32 octets représentant 32 échantillons d'une trame synchrone transportant 32 voies synchrones. La lecture des octets des voies synchrones est réalisée aléatoirement en fonction du contenu de la mémoire de marquage MM.

L'écriture de ces octets dans la mémoire d'entrée IM1 est réalisée au fur et à mesure de leur réception à l'entrée I1, à une adresse d'écriture fournie par un circuit de gestion des adresses disponibles, qui est classique et qui n'est pas représenté sur cette figure. Par ailleurs, la mémoire IM1 est doublée de façon à permettre une resynchronisation des multiplex synchrones reçus sur l'entrée I1, par rapport à une horloge locale du circuit de cellulisation CD1. La resynchronisation consiste à perdre ou à dupliquer une trame complète d'un multiplex synchrone. La seconde mémoire IM1 n'est pas représentée sur la figure, pour plus de clarté.

La mémoire de marquage MM contient l'information de marquage relative à la commutation des voies synchrones sur chaque voie logique asynchrone sortant du dispositif de cellulisation CD1. Cette information est stockée sous la forme d'une liste de liens. La mémoire MM comporte une page par cellule à émettre, chaque page comportant 48 lignes correspondant aux 48 octets de la charge utile d'une cellule. La mémoire MM comporte donc 6144 lignes, pour pouvoir émettre jusqu'à 128 cellules par période de trame.

L'utilisation d'une liste de liens pour retrouver les données de marquage a pour avantage d'optimiser la gestion des temps d'accès à la mémoire d'entrée IM1. Le nombre de cycles de lecture dans la mémoire IM1 est typiquement de 2048 cycles par période de 125 micro-secondes. Chaque ligne de la mémoire MM comporte deux champs : un premier champ contient un mot binaire K' qui est la prochaine adresse de ligne à lire dans la mémoire de marquage MM et dans une mémoire de formation de cellules CF1, ..., CF4; et un second champ contient un mot binaire Pe-Se qui est la prochaine adresse de page et la prochaine adresse de ligne à lire dans la mémoire d'entrée IM1.

Une sortie de la mémoire MM fournit un mot binaire K' et est reliée à une entrée du comparateur CP1 et à une première entrée du multiplexeur M1. La sortie du multiplexeur M1 est reliée à une entrée du registre R2. La sortie du registre R2 fournit un mot binaire K qui est une adresse courante de ligne pour la lecture dans les mémoires MM et CF1, ..., CF4. La seconde entrée du multiplexeur M1 est reliée à une sortie de la mémoire d'identités de cellules, CI, qui lui fournit une valeur initiale d'adresse de ligne, Kinit. Le multiplexeur M1 possède en outre une entrée de commande, non représentée, qui est reliée au bus de commande CB, par une interface non représentée. Le registre R2 comporte une entrée de commande, non représentée, reliée au bus de commande CB par une interface non représentée.

Le microprocesseur MP1 commande les séquences de fonctionnement du dispositif de cellulisation, selon le programme stocké dans la mémoire de programme PM. Le bus de commande CB achemine les commandes élaborées par le microprocesseur MP. En particulier, le microprocesseur MP commande : l'écriture des informations de marquage dans la mémoire MM; l'écriture des identités de cellules dans la mémoire CI; l'écriture dans le registre R2 ; et la commutation du multiplexeur M1.

La mémoire de marquage MM comporte en outre une entrée d'adresse de page qui est reliée à la sortie du registre R1 qui fournit un mot binaire J. Ce dernier constitue une adresse de page pour la lecture dans la mémoire MM et les mémoires CF1, ..., CF4. Le registre R1 possède une entrée de commande reliée à la sortie du comparateur CP1, et une entrée de données reliée à une sortie de la mémoire CI pour recevoir un mot binaire J' qui est la prochaine valeur adresse de page. Le comparateur CP compare la valeur de K' à une valeur de seuil égale à 48. Lorsque K' atteint la valeur 49 le comparateur CP1 commande la mémorisation de J' dans le registre R1 pour remplacer J. La mémoire d'identités de cellules, CI, comporte une entrée d'adresse de lecture reliée à la sortie du registre R1 pour recevoir J qui constitue l'adresse courante de lecture de la mémoire CI. Cette dernière comporte en outre une entrée-sortie de commande reliée au bus de commande CB.

Les connexions établies au sein du réseau ACN à mode de transfert asynchrone (ATM) sont quasi-semipermanentes car elles n'ont pas besoin d'être modifiées au rythme de l'établissement d'une communication sur les voies synchrones, sauf en ce qui concerne le paramètre débit de crête qui caractérise les ressources nécessaires pour une connexion, mais ce paramètre ne change que lentement au cours du temps. Lors de l'initialisation du centre de commutation , une connexion est établie dans le réseau à mode de tranfert asynchrone ACN entre tous les couples constitués d'une unité de raccordement d'entrée URe et d'une unité de raccordement de sortie URs, afin que chaque couple puisse communiquer. L'ensemble des connexions quasi-semipermanentes est donc défini dans chaque unité de raccordement d'entrée URe par une table, et dans chaque unité de raccordement URs par une autre table. Ces tables sont établies par un procédé classique pour l'établissement de connexions quasi-semipermanentes dans un réseau de connexion asynchrone.

Une fois le réseau de connexion initialisé, le régime de fonctionnement étant établi, le marquage d'une nouvelle connexion dans le réseau comporte les étapes suivantes pour une connexion d'une unité de raccordement URe, un multiplex synchrone PCMe, et une voie TSe donnés, vers une unité de raccordement URs, un multiplex synchrone PCMs, et une voie synchrone TSs donnés :

- l'unité de raccordement URe demande à l'unité de raccordement URs l'établissement d'une connexion. Cette connexion peut être supportée soit par un circuit virtuel déjà établi au sein d'un faisceau virtuel VP, soit par un nouveau circuit virtuel si la ressource demandée n'est pas disponible sur les circuits virtuels déjà établis.

- l'unité de raccordement URs fournit en retour à l'unité de raccordement URe : l'identité d'un faisceau virtuel VP, l'identité d'un circuit virtuel VC, et l'identité d'un octet à utiliser, plus une information indiquant que la connexion est nouvelle ou bien qu'elle n'est pas nouvelle.

Il faut distinguer ces deux cas :

- a) Si la connexion ATM dans le réseau ACN est nouvelle, l'unité de raccordement URe choisit l'instant où la cellule sera émise à l'intérieur de la période de 125 microsecondes considérée, et prépare une connexion. L'instant d'émission de la cellule est fixé par le choix de la valeur J qui constitue l'adresse de page pour la lecture dans la mémoire MM et dans l'une des mémoires CF1...CF4. L'unité de raccordement URe prépare la connexion en marquant dans la mémoire CI, à l'adresse J, les champs suivants :

> AE= 10 (connexion en cours d'établissement)
> HD=VP, VC; identifiant le faisceau virtuel et le circuit virtuel à utiliser.
> L=multiplex asynchrone ATMs à utiliser.
> Kinit= adresse de la première ligne de la page J.
> J'= adresse de l'identité de la prochaine cellule à former.

> D'autre part l'unité de raccordement URe écrit, à une adresse Jp contenant l'identité de la cellule précédant la cellule en cours de formation, la valeur J dans le champ destiné à contenir une adresse de ligne suivante.

> Et enfin, elle marque, dans la mémoire de marquage MM, à l'adresse Kinit, les champs suivants :

> Pe-Se respectivement l'identité d'un multiplex synchrone et d'une voie synchrone entrant dans l'unité de raccordement URe;
> K'= 49 : marqueur indiquant la fin de la cellulisation, les 48 lignes précédentes de la page J permettant de constituer une cellule comportant jusqu'à 48 octets de charge utile.

> Lorsque la connexion est établie effectivement, le champ ST, à l'adresse J de la mémoire d'identité de cellules CI, est modifié de 10 à OO.

- b) Si la connexion n'est pas déjà établie, l'unité de raccordement URe introduit une connexion ATM supplémentaire en marquant dans la mémoire MM, à l'adresse K=No, un champ Pe-Se désignant un multiplex synchrone et une voie synchrone dans ce multiplex, et un marqueur K'=49 qui permettra de repérer la fin de la cellulisation. Par ailleurs, l'unité de raccordement URe inscrit à l'adresse du dernier octet cellulisé avant l'établissement de cette connexion, un champ de valeur No au lieu de 49.

L'établissement d'une connexion ayant un débit Nx64 Kbits/s consiste à répéter N fois les opérations de marquage décrites ci-dessus.

Les octets situés dans la mémoire d'entrée IM1 sont lus puis inscrits dans les mémoires de formation des cellules ATM, CF1, ..., CF4, en fonction des ordres de marquage lus dans la mémoire de marquage MM. Dès qu'une cellule est complètement formée dans une mémoire de formation de cellules, elle est émise sur le multiplex asynchrone correspondant à cette mémoire de formation, avec un débit de 150 Mbits/s.

Pendant la formation d'une cellule ATM donnée, la valeur J est fixée et la valeur K varie de 1 à 48, de manière croissante mais pas forcément continue. La variation de K ne commence pas forcément à 1 et elle peut sauter certaines valeurs lorsque certains octets d'une cellule sont vides.

La lecture d'un marqueur K' = 49 indique la fin de la formation de la charge utile d'une cellule. Le comparateur CP commande le registre R1 pour fournir à la mémoire M une nouvelle adresse de page : J'.

L'adresse physique de lecture dans la mémoire MM, pour lire la première ligne de la page J est :

$$AMM = 48 \times J + No,$$

où No est une constante.

L'adresse physique de lecture dans la mémoire MM, pour la ligne K de la page J est :

$$AMM = 48 \times J + No + K$$

avec K prenant des valeurs diverses comprises entre 1 et 48, la valeur 49 étant utilisée seulement pour indiquer la fin de la cellulisation.

L'une des mémoires CF1, ..., CF4 de formation de cellules est sélectionnée par le mot binaire L fourni par la mémoire d'identités de cellules CI. L'adresse physique d'écriture dans l'une des mémoires CF1, ..., CF4 pour lire le premier octet de l'en-tête HD d'une cellule correspondant à la page J, est :

$$ACF = 53 \times J + N1$$

où N1 est une constante.

Les adresses ACF pour l'écriture de chacun 5 octets de l'en-tête HD dans l'une des mémoires CF1, ..., CF4, sont fournies par l'unité CU1 en même temps que les valeurs de ces 5 octets.

L'adresse physique d'écriture dans l'une des mémoires CF1, ..., CF4 pour écrire le premier octet de la charge utile d'une cellule correspondant à la page J, est:

$$ACF = 53 \times J + N1 + 5.$$

L'adresse physique, dans l'une des mémoires de formation de cellules ATM CF1, ..., CF4, pour écrire le Kième octet de la charge utile de cette cellule est :

$$ACF = 53 \times J + N1 + 5 + K$$

La valeur initiale de K, Kinit, qui n'est pas forcément O, est fournie par la mémoire d'identité de cellules CI, puis est transmise par un multiplexeur M1, lors de l'initialisation de la formation d'une cellule. Après cette initialisation, le multiplexeur M1 change d'état et transmet le mot binaire K', lu dans la mémoire MM, qui constitue la prochaine adresse de ligne K. Lorsque l'adresse K' de la prochaine ligne est égale à 49 ceci signifie qu'il n'y a pas de prochaine ligne à lire dans la page J en cours. Le comparateur CP1 commande le registre R1 pour qu'il mémorise et transmette sur sa sortie une nouvelle adresse de page, notée J', qui est fournie par la mémoire d'identités de cellule CI. Par ailleurs, chaque adresse J est utilisée comme adresse de ligne pour lire une prochaine ligne dans la mémoire CI.

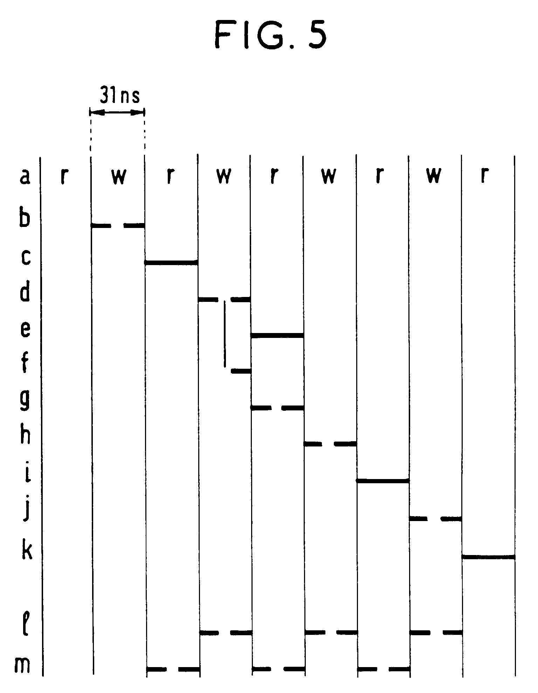

La figure 5 représente un chronogramme comportant des lignes a,b,c..., m représentant respectivement :

a) les cycles de lecture et d'écriture dans la mémoire IM, référencés respectivement r et w, chaque lecture et chaque écriture utilisant une durée de 31 ns, chaque période de trame comportant 2048 cycles de lecture-écriture;

b) une lecture dans la mémoire MM puis un changement de l'adresse de ligne K, pendant un cycle d'écriture dans la mémoire IM;

c) une écriture dans l'une des mémoires CF1, ..., CF4, pendant une lecture dans la mémoire IM;

d) une lecture dans la mémoire MM puis un changement de l'adresse de ligne K pendant une écriture IM;

e) une écriture dans l'une des mémoires CF1, ..., CF4 pendant une lecture dans la mémoire IM;

f) une détection de fin de cellulisation, qui a lieu pendant un cycle d'écriture dans la mémoire IM, en parallèle avec le changement de la valeur d'adresse de ligne, K;

g) pour une nouvelle cellulisation, une lecture dans la mémoire CI puis un chargement dans le registre R2 de la valeur initiale Kinit de l'adresse de ligne pour la nouvelle cellule à former;

h) une lecture dans la mémoire MM puis un changement de la valeur d'adresse de ligne, K, pendant une écriture dans la mémoire IM;

i) une écriture dans l'une des mémoires de formation de cellules CF1, ..., CF4, pendant une lecture dans la mémoire IM;

j) une lecture dans la mémoire MM puis un changement de la valeur d'adresse de ligne, K, pendant une écriture dans la mémoire IM;

k) une écriture dans l'une des mémoires de formation de cellules CF1, ..., CF4, pendant une lecture dans la mémoire IM.

Ces opérations continuent jusqu'à la fin de la cellulisation pour la cellule en cours.

Les deux dernières lignes, l et m, illustrent les opérations de marquage d'une connexion :

l) une lecture puis une écriture dans la mémoire d'identités de cellules CI pendant chaque écriture dans la mémoire IM;

m) une lecture puis une écriture dans la mémoire de marquage MM pendant chaque lecture dans la mémoire IM.

Un second exemple de réalisation du dispositif de cellulisation selon l'invention, peut être déduit du premier exemple, pour fournir des cellules de longueur variable. Le schéma synoptique de ce second exemple de réalisation est identique à celui du premier, représenté sur la figure 4. Seules les différences de fonctionnement seront donc décrites ci-dessous.

Ce second exemple met en oeuvre des informations d'acheminement qui sont différentes, mais cela ne change rien au procédé de décellulisation. Dans la mémoire d'identités de cellules, CI, le champ HD est modifié. Il contient encore des informations d'acheminement, mais celles-ci sont constituées : d'une étiquette d'auto-acheminement SRT, qui sera exploitée par les étapes de commutation situés en aval, au lieu de l'entête du format normalisé; et d'un champ de trois bits indiquant la longueur de la cellule considérée, c'est-à-dire son nombre de segments. Ce nombre de segments est déterminé par le microprocesseur MP1, en fonction du trafic à acheminer sur la voie logique à laquelle appartient la cellule considérée. Cette longueur est utilisée par le circuit de commande CU1, pour commander les mémoires CF1, ..., CF4 de formation de cellules.

Au lieu de lire 53 octets successifs, pour 32 cellules successives formées dans chaque mémoire CF1, ..., CF4, l'unité de commande CU1 lit seulement, pour chaque cellule, un nombre d'octets correspondant à la longueur indiquée dans le champ HD fourni par la mémoire CI; puis saute à l'adresse de lecture correspondant à la cellule suivante. Chaque mémoire de formation de cellule CF1, ..., CF4 est donc gérée comme une file d'attente où sont mises bout à bout les cellules à longueur variable.

Lorsqu'une cellule est complète, elle est mise en attente dans la file d'attente correspondant à l'un des

4 multiplex ATM$_e$n°1, ..., n°4, en fonction du champ L lu dans la mémoire CI. Elle est émise ensuite dès que c'est possible sur ce multiplex. Lorsqu'une file d'attente est vide, l'unité de commande CU1 commande l'émission de cellules vides, constituées d'un seul segment.

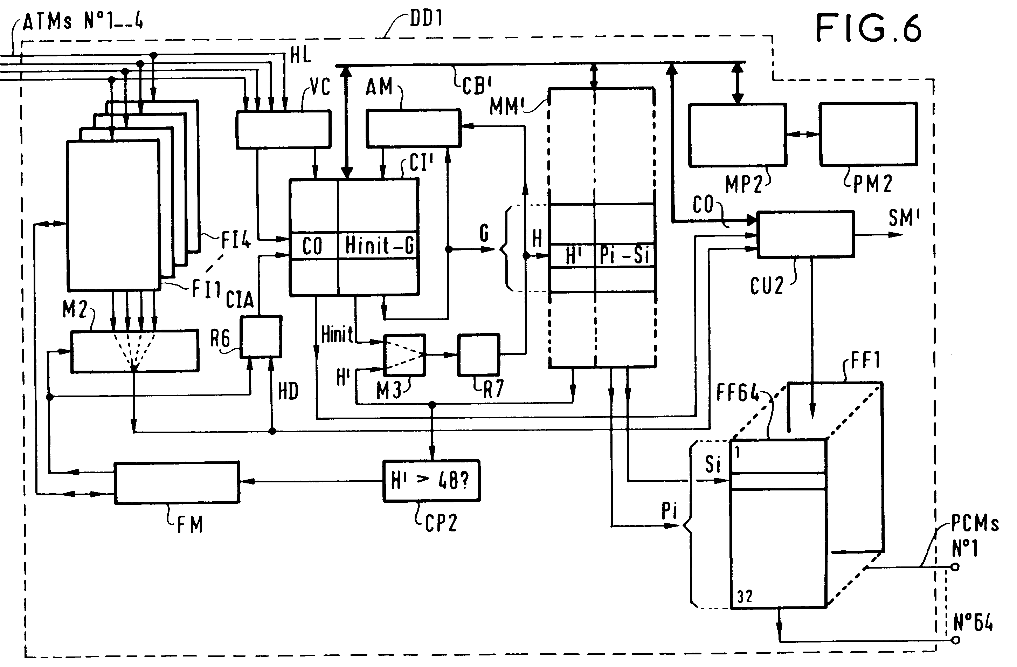

La figure 6 représente le schéma synoptique d'un premier exemple de réalisation DD1 du dispositif de décellulisation selon l'invention. C'est le même schéma synoptique pour des cellules à longueur fixe et pour des cellules à longueur variable. Il comporte :

- quatre mémoires, FI1, ..., FI4, du type premier entré-premier sorti, ayant chacune une entrée de données reliée à l'un des multiplex asynchrones ATMs n°1, ..., n°4, et elles ont une capacité totale de 96 cellules;
- un multiplexeur M2 ayant quatre entrées et une sortie, pour rassembler sur une même sortie des données lues dans les quatre mémoires FI1, ..., FI4;
- un circuit VC de vérification de l'identité de chaque cellule reçue par l'unité de raccordement URs qui comporte ce dispositif de décellulisation;
- une mémoire CI' dite d'identités de cellules, comportant 16 384 lignes correspondant à une capacité de 16 384 cellules reçues par le dispositif DD1;
- une mémoire MM', dite de marquage, comportant 128 pages de 48 lignes, chaque page correspondant à l'une des 128 cellules que peut recevoir l'unité de raccordement URs, au maximum, pendant une période- de trame, et chaque ligne correspondant à un octet de la charge utile de cette cellule;
- 64 mémoires, FF1, ..., FF64 dites de formation de trames, ayant chacune une sortie couplée respectivement à l'un des multiplex synchrones PCMs n°1, ..., n°64;
- deux registres R6 et R7;
- une unité de commande CU2, associée aux mémoires de formation de trames FF1, ..., FF64;
- un circuit FM de gestion des files d'attente, qui est relié aux mémoires FI1, ..., FI4;
- un circuit AM de gestion des adresses disponibles dans la mémoire de marquage MM';
- un comparateur CP2;
- un multiplexeur M3 ayant deux entrées et une sortie;
- un microprocesseur MP2, associé à une mémoire de programmes PM2, et couplé à un bus de commande CB', pour commander le fonctionnement de l'ensemble du dispositif de décellulisation DD1.

Cet exemple de réalisation comporte aussi une mémoire de messages de signalisation interne, référencée SM', qui n'est pas représentée sur la figure pour plus de clarté, et qui possède une entrée de données reliée à une sortie de l'unité de commande CU2.

Considérons tout d'abord le fonctionnement de ce dispositif pour des cellules à longueur fixe.

Les cellules reçues par le dispositif de décellulisation DD1 sont traitées une par une, le circuit FM lisant successivement les files d'attente dans les mémoires FI1, ..., FI4. Les octets représentant les échantillons de voies synchrones sont inscrits, à des adresses non consécutives, dans les mémoires de formation de trames FF1, ..., FF64 en fonction d'informations de marquage fournies par la mémoire MM'. Ces mémoires FF1, ...FF64 comportent : une entrée de données reliée à une sortie de l'unité de commande CU2; une entrée d'adresse d'écriture sélectionnant l'une de ces mémoires au moyen d'un mot binaire Pi ayant pour valeur le numéro du multiplex synchrone PCMs destinataire de l'octet fourni par l'unité CU2; et une entrée d'adresse de ligne recevant un mot binaire Si ayant pour valeur le rang de l'intervalle de temps qui doit supporter cet octet, dans la trame en cours de formation.

Des moyens d'adressage de lecture, non représentés, sont associés aux mémoires FF1, ..., FF64 pour lire chacune séquentiellement afin de fournir une trame de 32 octets à chaque multiplex PCMs n°1, ..., n°64 toutes les 125 micro-secondes.

Considérons tout d'abord le stockage des informations correspondant à une cellule, avant de considérer la reconstruction des trames des multiplex synchrones. Les multiplex asynchrones ATMs n°1, ..., n°4 sont reliés respectivement aux entrées des mémoires FI1, ..., FI4 et sont reliés respectivement à quatre entrées du circuit de vérification VC. Ces quatre entrées du circuit VC ne prélèvent que les en-têtes HD. Dans chaque en-tête HD, le circuit VC prélève l'identité de faisceau virtuel et l'identité de circuit virtuel, et tient compte en outre du numéro du multiplex asynchrone ATMs acheminant la cellule. Le circuit VC en déduit un code d'état CO qui prend les valeurs suivantes :

- OO si c'est une cellule attendue et qui contient des octets de voies synchrones;
- O1 si c'est une cellule attendue contenant un message de signalisation interne;
- 1O si c'est une cellule non attendue et qui est donc le résultat d'une erreur.

Une sortie du circuit VC est reliée à une entrée de données de la mémoire CI' pour lui fournir le code CO qui constitue un champ du mot binaire identifiant cette cellule. Une autre sortie reliée à une adresse d'écriture de la mémoire CI' pour lui fournir une adresse d'écriture constituée par l'identificateur de faisceau virtuel et l'identificateur de circuit virtuel. Chaque ligne de la mémoire CI' contient une identité de cellule, constituée du mot binaire CO mentionné précédemment, d'un mot binaire Hinit, et d'un mot binaire G dont les valeurs sont déterminées par le circuit AM de gestion des adresses libres dans la mémoire de marquage MM', pour toutes les cellules qui ont été reçues pendant la période de trame considérée. La valeur de G est une adresse de page correspondant à la cellule considérée, et la valeur de Hinit est une adresse initiale de ligne, à l'intérieur de cette page, pour une lecture ultérieure dans la mémoire de marquage MM'.

La mémoire MM' comporte 128 pages de 48 lignes, contenant des informations de marquage prédéterminées au moment de l'établissement des connexions dans le réseau de connexion asynchrone ACN.

Les mémoires FI1, ..., FI4, et le circuit de gestion FM, constituent des files d'attente qui sont lues dans l'ordre d'arrivée des cellules. Chaque cellule est restituée successivement par la sortie du multiplexeur M2, sous la forme d'une suite d'octets. Le multiplexeur M2 possède une entrée de commande reliée à une sortie du circuit de gestion FM pour commander le multiplexeur M2 afin de transmettre les octets fournis par l'une des mémoires FI1, ..., FI4, qui est commandée en lecture par le circuit FM. Cette sortie du circuit FM est reliée en outre à une entrée du registre R6 pour lui fournir deux bits désignant le multiplex ATMs n°1, ..., 4 qui a reçu la cellule en cours de lecture dans l'une des mémoires FI1, ..., FI4.

Les cinq premiers octets de chaque cellule constituent l'en-tête HD de cette cellule et sont prélevés par le registre R6, ainsi que les deux bits identifiant l'un des multiplex ATMs n°1, ..., 4. Le registre R6 mémorise ces deux bits et les champs de l'en-tête HD contenant l'identificateur de faisceau virtuel et l'identificateur de circuit virtuel. La valeur de ces deux bits et des deux identificateurs constitue une adresse de lecture CIA qui est appliquée à l'entrée d'adresse de lecture de la mémoire d'identités de cellules CI'. Une lecture dans cette mémoire CI' fournit l'identité de la cellule restituée par les files d'attente: Une première sortie de la mémoire CI', reliée à une entrée de l'unité de commande CU2, fournit le mot binaire CO et indique la nature de la cellule restituée par les files d'attente. Simultanément les octets de la charge utile de cette cellule sont fournis par la sortie du multiplexeur M2 à une entrée de l'unité CU2. Si c'est une cellule attendue et qui contient des octets de voies synchrones, l'unité CU2 retransmet ces octets à l'entrée de données commune aux mémoires de formation de trames FF1, ..., FF64.

Si la cellule restituée dans les files d'attente est une cellule attendue mais ne contenant qu'un message de signalisation interne, l'unité CU2 transmet la charge utile de cette cellule à la mémoire SM' de message de signalisation interne, qui n'est pas représentée sur la figure.

Si la cellule restituée est une cellule qui est parvenue sur les multiplex asynchrones ATMs n°1, ..., n°4, à la suite d'une erreur, l'unité de commande CU2 ne transmet pas la charge utile de cette cellule.

La lecture de la mémoire d'identités de cellules CI' à l'adresse CIA fournit en outre, sur une deuxième sortie de la mémoire CI', le mot binaire à une entrée du circuit AM et à une entrée d'adresse de page de la mémoire de marquage MM'. Une troisième sortie de la mémoire CI' fournit le mot binaire Hinit à une première entrée du multiplexeur M3. Au début du traitement d'une cellule restituée, le multiplexeur M3 transmet le mot binaire Hinit à l'entrée du registre R7. Ensuite, le multiplexeur M3 transmet le mot binaire H' qui est fourni à sa seconde entrée par une première sortie de la mémoire de marquage MM'.

Le registre R7 a une sortie reliée à une entrée d'adresse de ligne de la mémoire MM'. Cette sortie fournit une adresse de ligne H, sélectionnant une ligne dans la page G. Cette ligne contient :

- un mot binaire H' dont la valeur est la prochaine adresse de ligne à utiliser pour lire dans la mémoire MM';
- un mot binaire Pi et un mot binaire Si qui sont respectivement un numéro désignant l'un des multiplex synchrones PCMs n°1, ..., 4 et un numéro d'intervalle temporel dans une trame de ce multiplex synchrone.

La valeur de Hinit désigne la première ligne de la page G, de la mémoire MM', contenant effectivement une information utile, car toutes les lignes d'une page ne sont pas forcément utilisées. La valeur de H' permet de connaître la prochaine ligne qu'il faudra lire dans la page G.

L'adresse physique de lecture dans la mémoire MM' pour la première ligne d'une page est :

$$AMM' = G{\times}48 + N4$$

où N4 est une constante.

L'adresse physique de lecture dans la mémoire MM' pour chacune des autres lignes de cette page est :

$$AMM' = G{\times}48 + N4 + H$$

où H prend certaines des valeurs comprises entre 1 et 48, sans les prendre forcément toutes. La première sortie de la mémoire MM' fournit la valeur de H' à la seconde entrée du multiplexeur M3 et à une entrée du comparateur CP2. Le multiplexeur M3 possède une entrée de commande non représentée qui est reliée au bus de commande CB' par une interface non représentée pour commuter ce multiplexeur après une première lecture dans la mémoire MM'. La sortie du multiplexeur M3 transmet la valeur H' au registre R7 où elle est mémorisée à la fin du cycle de lecture dans la mémoire MM'. La valeur de H'permet ensuite une lecture d'une nouvelle ligne de la page G, cette ligne n'étant pas consécutive en général à la ligne précédemment lue.

Le comparateur CP2 a pour fonction de comparer la valeur de H' à une valeur de seuil égale à 48, et de fournir un signal logique résultat de cette comparaison à une entrée du circuit de gestion des files d'attente, FM. Lorsque le mot binaire H' lu dans la mémoire MM' a une valeur égale à 49, cela indique que la décellulisation d'une cellule est terminée. Le circuit de gestion des files d'attente FM peut alors entamer immédiatement la décellulisation d'une autre cellule ATM, ce qui permet de gagner du temps si la cellule précédente comportait beaucoup d'octets vides.

Les valeurs Pi et Si constituent une adresse d'écriture, pour écrire, dans l'une des mémoires de formation de trames FF1, ..., FF64, un octet de la charge utile de la cellule restituée. Une deuxième sortie de la mémoire MM' fournit la valeur de Si à une entrée d'adresse commune à toutes les mémoires FF1, ..., FF64. Une troisième sortie de la mémoire MM' fournit la valeur Pi à une adresse de sélection des mémoires FF1, ..., FF64, pour sélectionner l'une de ces mémoires. La figure ne représente pas les moyens classiques nécessaires à l'émission d'un multiplex synchrone : mémoire de resynchronisation pouvant stocker deux trames de chaque multiplex synchrone, dispositif de synchronisation d'horloge, dispositif générateur de codes à redondance cyclique, dispositif générateur de signaux de signalisation à insérer dans les intervalles de temps n°O et n°16 de chaque trame, etc.

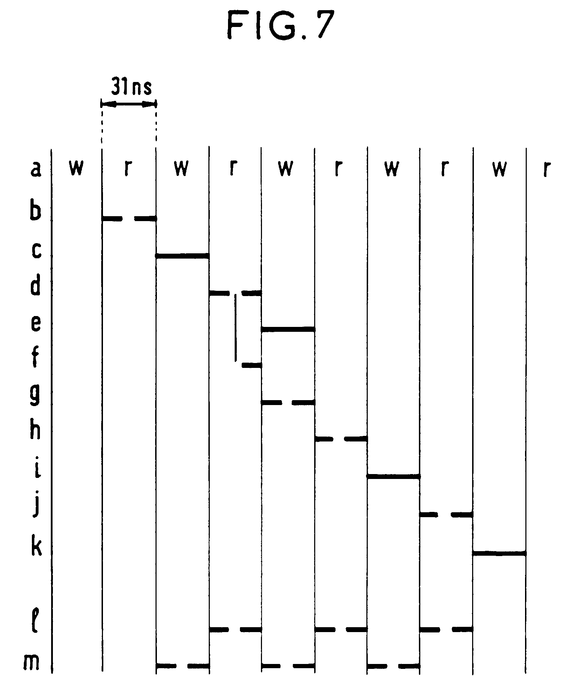

La figure 7 représente un chronogramme comportant des lignes a, b, c, ..., m illustrant le fonctionnement de ce premier exemple de réalisation du dispositif de décellulisation DD1 :

a) l'alternance des opérations de lecture et d'écriture dans les mémoires de formation de trames FF1, ..., FF64, où w représente l'opération d'écriture et r représente l'opération de lecture. Chacune de ces opérations dure 31 ns et il y a 2048 cycles de lecture et 2048 cycles d'écriture pendant chaque période de trame de 125 micro-secondes;

b) une lecture dans la mémoire de marquage MM' et un changement de la valeur d'adresse de ligne, H, pour la remplacer par la valeur de H' lue dans cette mémoire, pendant une lecture dans une mémoire FF;

c) une lecture dans la mémoire d'entrée FI1, ..., FI4 pendant un cycle d'écriture dans la mémoire FF;

d) une lecture dans la mémoire de marquage MM' puis un changement de la valeur de H, pour la remplacer par la valeur de H' lue dans cette mémoire, pendant un cycle de lecture dans une mémoire FF;

e) représente une lecture dans la mémoire d'entrée FI1, ..., FI4 pendant un cycle d'écriture dans une mémoire FF;

f) la détection du dernier octet d'une cellule, pendant la seconde moitié d'un cycle de lecture dans une mémoire FF;

g) le traitement d'une nouvelle cellule : lecture dans la mémoire d'identités de cellules CI' puis un chargement de la valeur Hinit dans le registre R7, pendant un cycle de lecture d'une mémoire FF;

h) une lecture dans la mémoire de marquage MM' puis un changement de la valeur de H, la valeur de Hinit étant remplacée par la valeur de H' lu dans la mémoire MM', pendant un cycle de lecture dans une mémoire FF;

i) une lecture dans une mémoire d'entrée FI1, ..., FI4, pendant un cycle d'écriture dans une mémoire FF;

j) une lecture dans une mémoire de marquage MM' puis un changement de la valeur de H, pour la remplacer par la valeur de H' lu dans la mémoire MM', pendant un cycle de lecture dans une mémoire FF;

k) une lecture dans une mémoire d'entrée FI1, ..., FI4, pendant un cycle d'écriture dans une mémoire FF.

Les opérations de marquage des connexions sont représentées par les lignes l et m de ce chronogramme :

l) une lecture puis une écriture dans la mémoire d'identités de cellules CI', réalisée pendant chaque cycle de lecture dans une mémoire FF;

m) une lecture puis une écriture dans la mémoire de marquage MM', réalisée pendant chaque cycle d'écriture dans une mémoire FF.

Un second exemple de réalisation du dispositif de décellulisation, pour cellules à longueur variable, peut être déduit de ce premier exemple de réalisation, et il peut avoir un schéma synoptique identique à celui représenté sur la figure 6. Seules les différences de fonctionnement seront décrites ci-dessous.

Ce second exemple de réalisation est plus particulièrement adapté pour des cellules dont les informations d'acheminement sont constituées par une étiquette d'auto-acheminement. Le circuit VC de vérification de l'identité de chaque cellule vérifie l'étiquette d'auto-acheminement de chaque cellule, au lieu de l'identité de faisceau virtuel et l'identité de circuit virtuel. Il fournit à l'entrée d'adresse d'écriture de la mémoire CI' une adresse correspondant à un numéro de voie logique déduit de l'étiquette d'auto-acheminement.

Le circuit FM de gestion des files d'attente commande les mémoires FI1, ..., FI4 pour constituer des files d'attente, où les cellules à longueur variable sont mémorisées bout à bout, puis sont restituées cellule par cellule, la longueur de chaque cellule étant connue par 3 bits parmi les données transportées par chaque cellule.

Considérons les différents délais de traversée d'une voie synchrone à une autre voie synchrone. Dans l'unité de raccordement d'entrée URe, le délai de traversée se compose des délais suivants :

- l'usage d'une double mémoire d'entrée MI, pour la resynchronisation d'un multiplex synchrone entrant, impose un temps de traversée de cette mémoire qui est égal au maximum à 125 microsecondes et en moyenne à 62,5 microsecondes;

- la formation d'une cellule peut avoir une durée maximale correspondant à 44 octets soit 2,69 micro-secondes;
- la durée d'émission d'une cellule sur un multiplex asynchrone à 155 Mbits/s est de 2,736 micro-secondes. Une mémoire de formation de cellules CF1, ..., CF4 peut recevoir 32 cellules jointives, dans le pire cas. Le délai maximal est subi par la dernière cellule, et est égal à 85,6 microsecondes. Le délai moyen d'attente dans ces mémoires est donc de 42,8 micro-secondes.

En conclusion le délai de traversée de l'unité de raccordement URe est estimé égal à 214 micro-secondes au maximum, et 108 micro-secondes en moyenne.

Dans une unité de raccordement sortante URs, le délai de traversée se compose des délais suivants :

- le délai de l'une des files d'attente dans les mémoires FI1, ..., FI4. Chacune contient au maximum 96 cellules, soit un délai maximal de 258 microsecondes, mais chacune contient en moyenne 0,5 cellule, soit un délai de 1,4 microsecondes;
- la durée de décellulisation d'une cellule est égale au maximum, à 2,69 microsecondes;
- la durée de réémission d'un échantillon de voie synchrone dans une trame synchrone a une durée maximale de 125 micro-secondes et une durée moyenne de 62,5 micro-secondes.

En conclusion, le délai estimé de la traversée de l'unité de raccordement sortante URs est donc au total : 386 micro-secondes au maximum, et 67 micro-secondes en moyenne.

Le délai de traversée total des deux unités de raccordement URe et URs, dans un sens, est donc : 600 microsecondes au maximum et 175 micro-secondes en moyenne.

Pour respecter un délai maximal de 900 micro-secondes, aller et retour, il faut et il suffit que le réseau de connexion ACN ait un délai aller et retour de 300 microsecondes, dans le pire cas; et de 550 micro-secondes en moyenne. Les réseaux de connexion de types connus, à mode de transfert asynchrone, peuvent avoir des délais de traversée inférieurs à ces valeurs.

Le dispositif de cellulisation et le dispositif de décellulisation selon l'invention permettent donc de réaliser un centre de commutation synchrone comportant un réseau de connexion asynchrone utilisé efficacement parce que les cellules ont un taux de remplissage élevé, tout en respectant la recommandation Q551.Dans les exemples de réalisation décrits ci-dessus, chaque échantillon d'une voie synchrone est représenté par un seul octet, mais une variante de réalisation peut consister à représenter chaque échantillon par un octet traduisant sa valeur, et un octet supplémentaire contenant un code de détection d'erreur. L'adaptation des exemples de réalisation décrits ci-dessus, pour deux octets par échantillon, est à la portée de l'homme de l'art.

Les exemples décrits précédemment montrent l'application du dispositif de cellulisation et du dispositif de décellulisation selon l'invention pour la réalisation d'un centre de commutation synchrone. Les dispositifs selon l'invention permettent aussi la réalisation de centres de commutation asynchrone permettant d'acheminer vers des centres de commutation asynchrones ou synchrones, des cellules composites produites par un dispositif de cellulisation selon l'invention.

Le dispositif de cellulisation et le dispositif de décellulisation selon l'invention permettent de diffuser d'une voie synchrone, vers n'importe quelle autre voie synchrone, un signal de tonalité ou d'annonce. La diffusion est faite d'une part au niveau du réseau de commutation ACN, et d'autre part au niveau des dispositifs de décellulisation DD dans les unités de raccordement de sortie URS n°1, ..., q. Pour réaliser une diffusion, le microprocesseur MP2 du dispositif de décellulisation DD1, par exemple, écrit plusieurs fois les mêmes informations de marquage, dans la mémoire de marquage MM', pour transférer plusieurs fois un même octet d'une mémoire d'entrée F11, ..., FI4 vers les mémoires de formation de trames FF1, ..., FF64, pour émettre cet octet dans plusieurs voies synchrones.

Le dispositif de cellulisation et le dispositif de décellulisation selon l'invention permettent en outre de réaliser un test de continuité des voies synchrones. Ce test consiste à émettre des octets de test périodiquement dans chaque voie synchrone, au niveau du dispositif de cellulisation; et à vérifier la présence de ces mêmes octets de test à la sortie du dispositif de décellulisation.

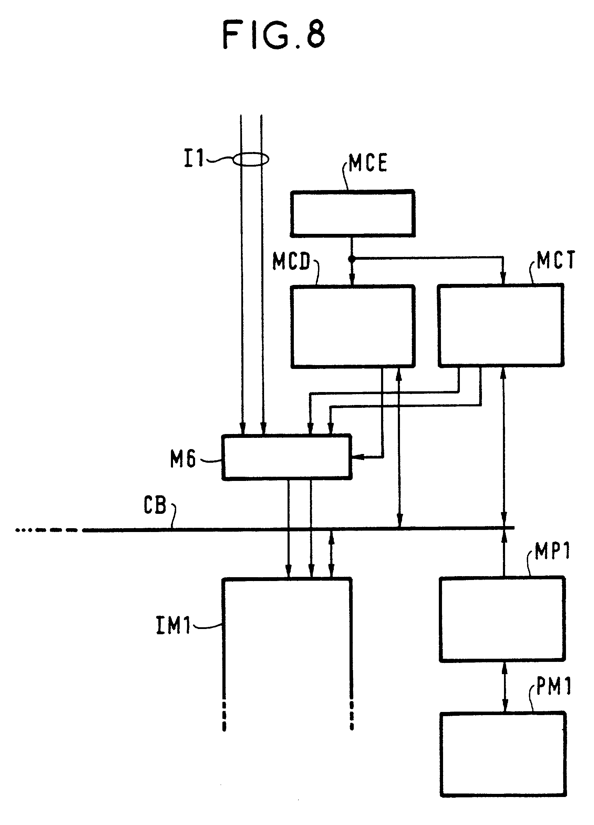

La figure 8 représente le schéma synoptique des moyens à rajouter à un dispositif de cellulisation tel que l'exemple CD1 représenté sur la figure 4. Ces moyens supplémentaires sont intercalés entre l'entrée I1 et la mémoire d'entrée IM1.

Ils comprennent :

- une mémoire MCT contenant 2048 mots de test, chargée préalablement par le microprocesseur MP1;
- un compteur MCE incrémenté par une horloge, au rythme des échantillons entrant par l'entrée I1;
- une mémoire MCD contenant 2048 x 1 bits, prédéterminés puis chargés dans cette mémoire par le microprocesseur MP1;
- un multiplexeur M6 ayant : une entrée reliée à l'entrée I1 pour recevoir les deux multiplex synchrones; une entrée reliée à une sortie de la mémoire MCT pour recevoir deux octets de test de continuité; une entrée de commande reliée à une sortie de la mémoire MCD; et une sortie reliée à l'entrée de données de la mémoire IM1, cette entrée n'étant plus reliée à l'entrée I1.

Les mémoires MCD et MCT sont couplées au microprocesseur MP1 par le bus CB. Le compteur MCE fournit une adresse qui identifie les 2 intervalles temporels dans lesquels seront émis les 2 octets de test. Cette adresse est utilisée pour lire le mot de test dans la mémoire MCT, et pour lire un bit de commande du multiplexeur M6, dans la mémoire MCD. Selon la valeur de ce bit, le multiplexeur M6 transmet deux octets représentant deux échantillons des multiplex synchrones arrivant à l'entrée I1, ou transmet les 2 octets de test de continuité fournis par la mémoire MCT.

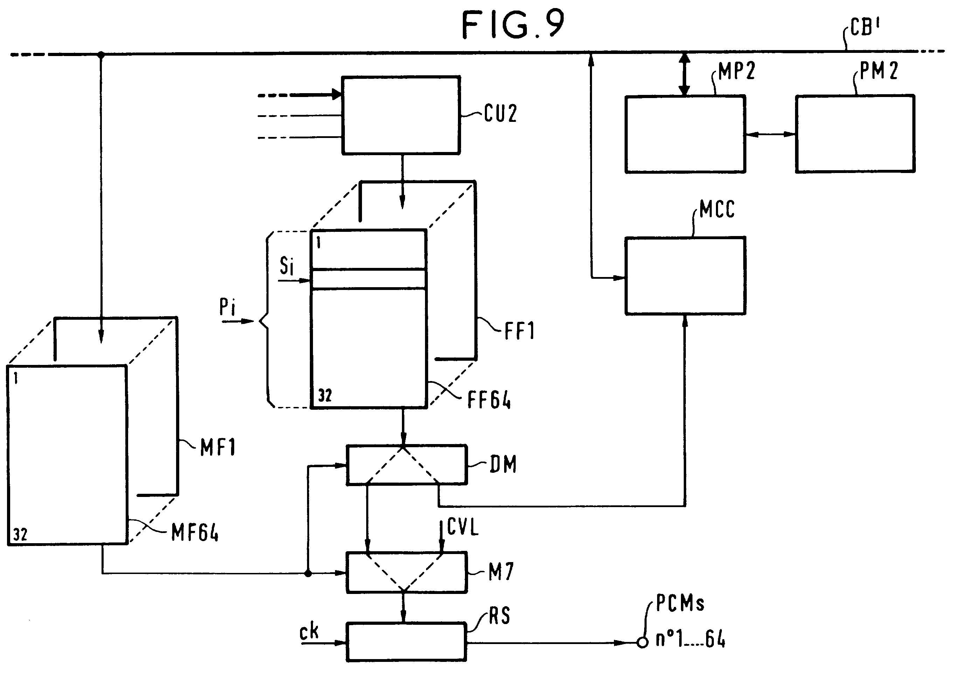

La figure 9 représente le schéma synoptique des moyens à rajouter à un dispositif de cellulisation, tel que l'exemple DD1 représenté sur la figure 6, pour permettre un test de continuité des voies synchrones, et un réarrangement des voies synchrones dans les cellules. L'unité de commande CU2 et les éléments non représentés sur la figure 9 sont inchangés. Les moyens à rajouter comprennent :

- un démultiplexeur DM, à une entrée et deux sorties de données; cette entrée de données étant reliée à la sortie de données des mémoires de formation de trames FF1, ..., FF64;
- un dispositif MCC de vérification des octets de test, constitué essentiellement d'une mémoire analogue à la mémoire MCT et qui contient les octets de test attendus, et d'un circuit logique de comparaison; ce dispositif ayant une entrée-sortie couplée au bus CB, par une interface non représentée, et ayant une entrée reliée à une première sortie du démultiplexeur DM;
- un multiplexeur M7, à deux entrées et une sortie, ayant : une première entrée reliée à la seconde sortie du démultiplexeur DM; une seconde entrée recevant un octet fixé, CVL, qui est un mot de code indiquant que la voie qui porte ce mot de code est libre;
- un ensemble de registres de sortie, RS, permettent de former une trame pour chacun des 64 multiplex synchrones PCMS, n°1, ..., 64 sortant du dispositif de décellulisation; cet ensemble RS ayant : une entrée de données reliée à la sortie du multiplexeur M7; une sortie couplées aux multiplex synchrones $PCM_s$n°1, ..., 64; et une entrée d'horloge d'écriture recevant un signal d'horloge périodique CK, au rythme des octets à inscrire pour reconstituer une trame de 32 octets;
- 64 mémoires de marquage de formation de trame, MF1, ..., MF64 correspondant respectivement aux 64 multiplex synchrone de sortie $PCM_s$n°1, ..., 64; ayant une entrée de commande couplée au bus CB ' par une interface non représentée, et ayant une sortie de données reliée à une entrée de commande du multiplexeur M7, et à une entrée de commande du démultiplexeur DM.

Les 64 mémoires MF1, ..., MF64 correspondant respectivement aux 64 trames de 32 octets qui sont à émettre périodiquement. Elles contiennent pour chaque voie synchrone un mot binaire indiquant l'état de cette voie : voie au repos; ou voie en cours de contrôle de continuité; ou voie active.

Ce mot binaire détermine l'identité des informations devant constituer les trames synchrones à la sortie du dispositif de décellulisation : octet de test, ou octet représentant un échantillon de signal, ou un octet de code indiquant que la voie est libre. Elles sont lues séquentiellement au rythme des échantillons restitués sur les multiplex synchrones par des moyens non représentés fournissant aussi une adresse de lecture aux mémoires de formation de trame FF1, ..., FF64. Le contenu des mémoires MF1, ..., MF64 est inscrit dans ces mémoires par le microprocesseur MP2.

Lorsque la voie est au repos, le multiplexeur M7 est commandé pour transmettre le mot de code CVL. Lorsque la voie est en cours de test de continuité, le démultiplexeur DM est commandé pour transmettre les octets reçus au dispositif de vérification de continuité MCC. Simultanément le multiplexeur M7 est commandé pour transmettre le mot de code CVL indiquant que la voie est libre, en aval. Lorsque la voie est active, le démultiplexeur DM et le multiplexeur M7 sont commandés pour transmettre à l'ensemble de registres RS respectivement les octets lus dans les mémoires de formation de trame FF1, ..., FF64.

Les moyens supplémentaires représentés sur la figure 9 permettent en outre un réarrangement des voies synchrones dans les cellules, consistant à transférer une voie synchrone d'une première voie logique à mode de transfert asynchrone vers une seconde voie logique à mode de transfert asynchrone, lorsque les cellules supportant la première voie sont presque vides, et donc peu efficaces pour la transmission et la commutation des voies synchrones. Le dispositif de cellulisation, tel que l'exemple CD1 représenté sur la figure 4, participe à l'opération de réarrangement, mais il ne nécessite pas de moyens supplémentaires sauf que le logiciel du microprocesseur MP1 remplit des fonctions supplémentaires : Il détermine quelles sont les voies synchrones qui doivent subir un réarrangement, c'est-à-dire les voies synchrones pour lesquelles une première connexion a été établie, mais est supportée par des cellules trop peu remplies, à l'instant considéré.

Il établit alors, pour chacune de ces voies synchrones une seconde connexion. Lorsque cette seconde connexion a effectivement été établie, et qu'elle a été validée par un test de continuité, le microprocesseur MP2 du dispositif de décellulisation décide de relâcher la première connexion au profit de la seconde. Les mémoires de formation de trame FF1, ..., FF64, contiennent donc, à un moment donné, deux octets représentant un même échantillon de la voie en cours de réarrangement, mais un seul de ces octets est transféré à l'ensemble de registres RS. Dès que la nouvelle connexion est validée, le marquage qui détermine l'adresse de lecture dans les mémoires FF1, ..., FF6 est modifié, dans la mémoire de marquage MM1 et dans les mémoires MF1, ..., MF64 de marquage de formation de trame, afin de lire dans les mémoires FF1, ..., FF64, puis inscrire dans l'ensemble de registre RS, l'octet correspondant à la nouvelle connexion.

Pour l'établissement de la nouvelle connexion, le microprocesseur MP1 du dispositif de cellulisation CD1 insère un nouveau mot binaire N dans la mémoire de marquage MM; et le microprocesseur MP2 du dispositif de décellulisation DD1 insère le même mot N dans la mémoire de marquage MM'.

Les mots contenus dans les mémoires MM et MM' sont chaînés. Chaque mot $M_i$ est appelé par un mot $M_{i-1}$ et il appelle un mot $M_{i+1}$, ou bien termine une page.

Si un nouveau mot N doit être inséré entre des mots $M_i$ et $M_{i+1}$, chaque microprocesseur commande :

- l'écriture du mot N appelant $M_{i+1}$, à une adresse libre;
- l'écriture du mot $M_i$ appelant le mot N , et non plus $M_{i+1}$, à l'adresse où était le mot $M_i$ appelant $M_{i+1}$.

Dans le dispositif DD1, le microprocesseur MP2 commande alors l'écriture, dans les mémoires FF1, ..., FF64, d'un mot de code indiquant que la voie est active.

Lors du relâchement d'une connexion, les microprocesseurs MP1 et MP2 commandent la suppression d'un mot Mj dans les mémoires de marquage MM et MM' respectivement. Si ce mot Mj doit être supprimé entre deux mots $M_{j-1}$ et $M_{j+1}$, chaque microprocesseur commande l'écriture du mot $M_{j-1}$ appelant Mj, et non plus $M_{j+1}$, à l'adresse où était le mot $M_{j-1}$. En outre, dans le dispositif DD1, le microprocesseur MP2 commande l'écriture, dans les mémoires FF1, ..., F64, d'un mot de code indiquant que la voie est libre.

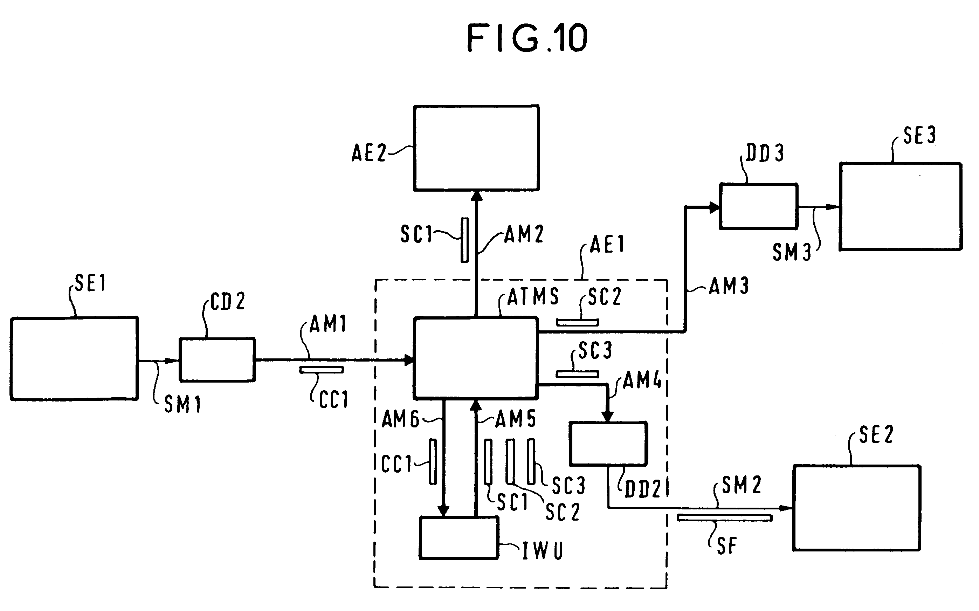

La figure 10 représente le schéma synoptique d'un centre de commutation asynchrone, AE1, et de ses liaisons avec trois centres de commutation synchrone SE1, SE2, SE3, et avec un autre centre de commutation asynchrone AE2, pour un exemple de transmission. Seuls sont représentés les moyens nécessaires pour un seul sens de transmission, afin de clarifier la figure.

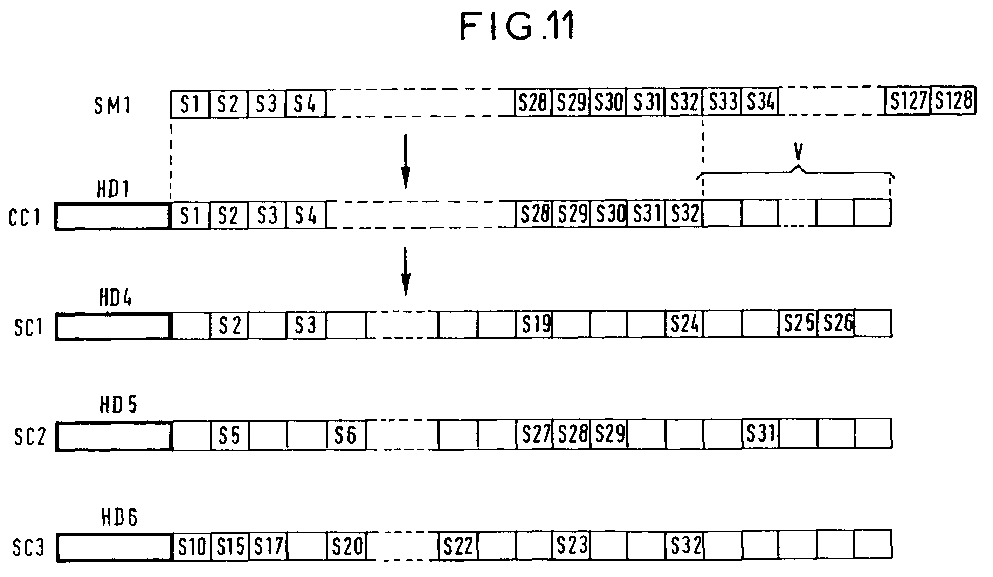

Par ailleurs, la figure 11 illustre le fonctionnement de ce centre en représentant schématiquement :

- le contenu d'une trame d'un multiplex synchrone SM1 qui est à transmettre du centre de commutation synchrone SE1 vers plusieurs destinations qui sont constituées par les centres de commutation SE2, SE3 et AE2;
- une cellule composite CC1 obtenue par cellulisation de cette trame du multiplex synchrone SM1, le reste de cette trame étant transmis dans d'autres cellules composites non représentées;
- et trois cellules SC1, SC2, SC3 qui sont obtenues en redécomposant la cellule composite CC1.

Le centre de commutation synchrone SE1 émet une trame S1, S2, ..., S128 sur le multiplex synchrone SM1, mais cette trame est acheminée en fait sous la forme d'une suite de cellules composites jusqu'au centre de commutation AE1, grâce à un dispositif de cellulisation CD2 placé à proximité du centre de commutation synchrone SE1. Le dispositif CD2 sera décrit plus loin. Le centre de commutation asynchrone AE1 est relié à un autre centre de commutation asynchrone AE2 par un multiplex asynchrone AM2. Il est relié à un centre de commutation synchrone SE3 par un multiplex asynchrone AM3, grâce à un dispositif de décellulisation DD3 placé à proximité du centre SE3 et qui lui est relié par un multiplex asynchrone SM3.

Le centre de commutation asynchrone AE1 est relié en outre à un centre de commutation synchrone SE2 par un multiplex synchrone SM2, grâce au fait que le centre AE1 comporte un dispositif de décellulisation DD2. En effet, le centre AE1 comporte un réseau de connexion ATMS à mode de transfert asynchrone classique, associé au dispositif de décellulisation DD2 et à une unité dite d'interfonctionnement IWU. Le réseau de connexion ATMS est relié directement aux multiplex asynchrones AM1, AM2, AM3. Il est relié au dispositif de décellulisation DD2 par un multiplex asynchrone AM4, et à l'unité d'interfonctionnement IWU par un multiplex AM5 entrant dans le réseau de connexion ATMS par un multiplex asynchrone AM6 sortant du réseau de connexion ATMS.

Dans l'exemple représenté sur la figure 10, le centre de commutation SE1 envoie sur le multiplex synchrone SM1 une trame S1, ..., S128 qui est destinée partiellement à trois destinations qui sont les centres AE2, SE3, SE2, le centre AE1 n'ayant que le rôle d'un centre de transit. Le dispositif de cellulisation CD2, placé en sortie du centre SE1 met cette trame sous la forme de quatre cellules composites. Seule la première cellule composite, CC1, est représentée sur la figure 10.

Les cellules utilisées pour la transmission sont de préférence des cellules à longueur fixe, mais il est à la portée de l'Homme de l'Art d'utiliser des cellules à longueur variable, en remplaçant les dispositifs CD2, DD2, DD3 par des dispositifs de cellulisation et de décellulisation pour cellules à longueur variable.

La figure 11 illustre la conversion de la trame S1, ..., S128, représentant par exemple des échantillons de 128 voies synchrones respectivement. Ces voies synchrones sont susceptibles d'être supportées par une même voie logique reliant le centre de commutation synchrone SE1 au centre de commutation asynchrone AE1. Ces 128 octets sont transportés au moyen de quatre cellules successives, à longueur fixe, ayant des en-têtes qui sont identiques. Seule la première de ces cellules, CC1, est représentée sur la figure 11. Elle a une en-tête HD1. Chaque cellule transporte 32 octets successifs et comporte 12 octets vides en fin de cellule.

Par exemple, la cellule composite CC1 transporte 32 octets S1, ..., S32 représentant respectivement un échantillon des 32 premières voies synchrones par le multiplex synchrone SM1. Lorsque la cellule CC1 a atteint le centre de commutation asynchrone AE1, ces octets ne sont plus susceptibles d'être acheminés par une même voie logique car ils doivent être séparés pour être acheminés vers les centres de commutation AE2, SE3, SE2, selon les cas. La cellule composite CC1 est alors transformée en trois cellules SC1, SC2, SC3, correspondant à trois voies logiques d'acheminement respectivement vers les centres de commutation AE2, SE3, SE2.

Par exemple, les octets S2, S3, ..., S19, S24, S25, S26, qui sont destinés au centre de commutation AE2 sont placés dans une cellules SC1 comportant une en-tête HD4 désignant une voie logique reliant par exemple le centre AE1 au centre AE2. Les octets S5, S6, ..., S27, S28, S29, S31 qui sont destinés au centre de commutation SE3 sont placés dans une cellule SC2 munie d'une entête HD5 désignant une voie logique reliant le centre AE1 au centre SE3. Les octets S10, S15, S17, S20, S22, S23, S32 qui sont destinés au centre SE2, sont placés dans une cellule SC3 munie d'une entête HD6 désignant une voie logique reliant le centre AE1 au centre SE2.

Une variante de réalisation peut consister à mettre trois trames successives dans deux cellules successives, puisque 96 octets ont exactement la place nécessaire dans les 2 X 48 octets de charge utile de deux cellules.

La cellule composite CC1 est acheminée dans le réseau de connexion ATMS vers le multiplex AM6 pour la transmettre à l'unité d'interfonctionnement IWU. L'unité IWU restitue trois cellules SC1, SC2, SC3, sur le multiplex asynchrone AM5. Ces trois cellules comportent respectivement les octets ayant pour destination : le centre de commutation asynchrone AE2, le centre de commutation synchrone SE3, et le centre de commutation synchrone SE2.

Ce sont encore des cellules composites, mais qui supportent généralement moins de voies synchrones que la cellule composite CC1. Chacune comporte dans son en-tête un identificateur de faisceau virtuel et un identificateur de circuit virtuel. Les en-têtes des trois cellules SC1, SC2, SC3 identifient trois voies logiques différentes correspondant respectivement aux trois destinations.

Le réseau de connexion ATMS achemine alors ces cellules respectivement vers ces destinations. La cellule SC3 ne sort pas du centre AE1. Elle est reconvertie sous la forme d'une trame synchrone SF par le dispositif de décellulisation DD2 pour être acheminable sur le multiplex synchrone SM2, à destination du centre SE2. Par contre, les cellules SC1 et SC2 sortent effectivement du centre AE1 et sont transmises jusqu'à leurs destinations respectives. La cellule SC2 est reconvertie sous la forme d'une trame du multiplex asynchrone SM3, au moment où elle arrive près du centre de commutation synchrone SE3, au moyen du dispositif de décellulisation DD3.

Le dispositif d'interfonctionnement IWU est un dispositif connu car il est déjà utilisé comme passerelle entre un réseau de télécommunication à voie synchrone et un réseau de télécommunication à voie asynchrone, et il est décrit par exemple dans la demande de brevet français n° 2 655 794. Dans l'application décrite ci-dessus, il y a un seul dispositif d'interfonctionnement IWU pour permettre la transmission de voies synchrones d'un centre de commutation synchrone SE1 vers plusieurs centres de commutation synchrones ou asynchrones, alors que classiquement une passerelle comportant un dispositif d'interfonctionnement est nécessaire pour chaque couple constitué d'un centre de commutation asynchrone et d'un centre de commutation synchrone, devant communiquer. Il apparaît donc que l'utilisation de dispositifs de cellulisation et de dispositifs de décellulisation selon l'invention permet l'interfonctionnement d'un plus grand nombre de centres de commutation, pour un nombre donné de dispositifs d'interfonctionnement.

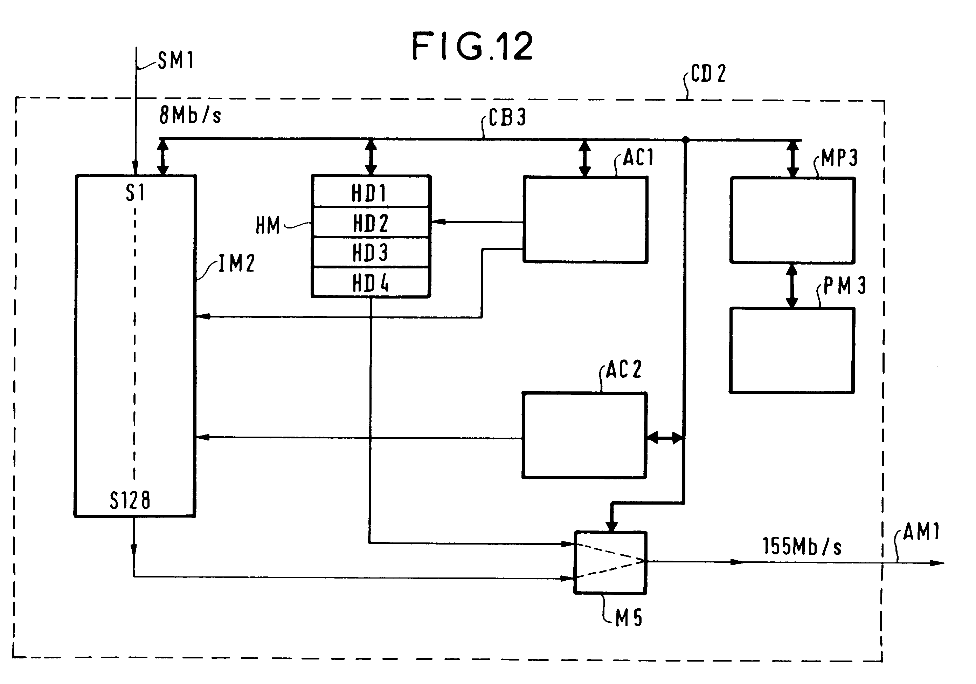

La figure 12 représente le schéma synoptique d'un second exemple CD2 de réalisation du dispositif de cellulisation selon l'invention. Cet exemple de réalisation est plus particulièrement destiné à recevoir le multiplex synchrone SM1 et à émettre le multiplex asynchrone AM1 mentionné sur la figure 10. Il reçoit donc 128 octets S1, ..., S128, par période de 125 micro-secondes.

Il comporte :

- une mémoire d'entrée IM2 ayant une capacité de 128 octets et qui est du type premier entré-premier sorti;
- un circuit d'adressage de lecture AC1;
- un circuit d'adressage d'écriture AC2;
- une mémoire HM pour stocker quatre en-têtes HD1, ..., HD4 constituées chacune de 5 octets;
- un microprocesseur MP3 associé à une mémoire de programmes PM3, et couplé à un bus de commande CB3;
- un multiplexeur M5 comportant deux entrées de données et une sortie, et ayant une entrée de commande couplée au bus CB3 par une interface non représentée.

Le microprocesseur MP3 et la mémoire de programmes PM3 jouent le rôle d'un séquenceur commandant : les mémoires IM2, HM, les circuits d'adressage AC1, AC2, et le multiplexeur M5, via le bus de commande CB3. Le circuit d'adressage d'écriture AC2 fournit des adresses d'écriture pour inscrire successivement 128 octets de données dans la mémoire IM2 au cours de chaque période de trame du multiplex synchrone SM1. Pour constituer une première cellule composite SC1, le circuit d'adressage en lecture AC1 fournit tout d'abord cinq adresses successives à la mémoire HM pour lire les cinq octets constituant l'en-tête HD1 de la cellule CC1, puis il fournit 32 adresses successives à la mémoire IM2 pour lire les 32 premiers octets de la trame qui est stockée dans cette mémoire. Ces opérations de lecture sont réalisées au rythme de 155,52 Mb/s.

Une première entrée du multiplexeur M5 est reliée à une sortie de la mémoire HM. Une seconde entrée du multiplexeur M5 est reliée à une sortie de la mémoire IM2. La sortie du multiplexeur M5 constitue la sortie du dispositif de cellulisation CD2. Pendant une première phase, le multiplexeur M5 est commandé par le microprocesseur MP3 pour transmettre l'en-tête fournie par la mémoire HM, puis pendant une seconde phase il est commandé pour transmettre les octets de charge utile fournis par la mémoire IM2. La même séquence d'opérations est répétée pour émettre ensuite des cellules composites CC2, CC3, et CC4 permettant de transmettre l'ensemble des 128 octets d'une trame du multiplex SM1.

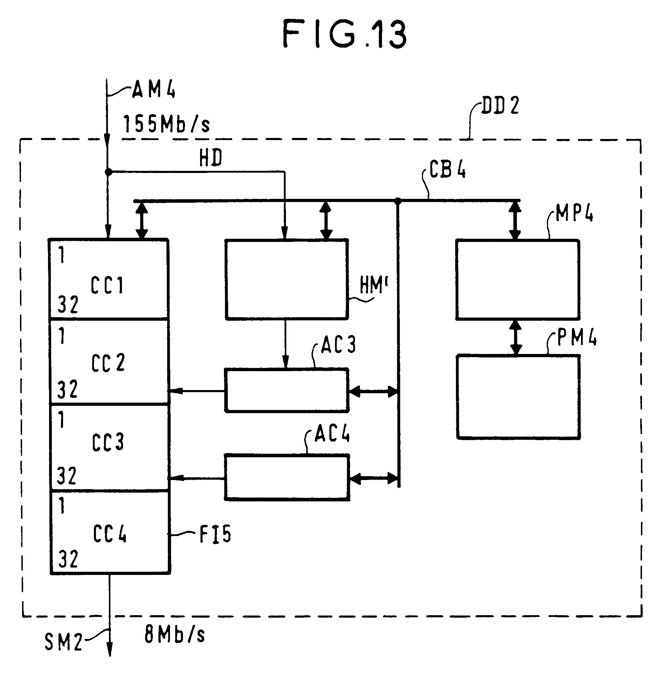

La figure 13 représente le schéma synoptique d'un second exemple, DD2, de réalisation du dispositif de décellulisation selon l'invention, qui est plus particulièrement adapté pour être utilisé dans le centre de commutation asynchrone AE1 représenté sur la figure 10. Il reçoit sur une entrée le multiplex asynchrone AM4 ayant un débit de 155,52 Mb/s et restitue un multiplex synchrone SM2 ayant un débit de 8,192 Mbits/s, organisé en trames de 128 octets. Il comporte :

- une mémoire FI5 ayant la capacité nécessaire pour stocker quatre paquets de 32 octets, qui sont les octets de données transportables par les quatre cellules CC1, CC2, CC3, CC4;
- une mémoire HM', accessible par le contenu, et permettant de reconnaître chacune des quatre en-têtes HD1, HD2, HD3, HD4;
- un circuit d'adressage d'écriture AC3;
- un circuit d'adressage de lecture AC4;
- un microprocesseur MP4, associé à une mémoire de programme PM4, et couplé à un bus de commande CB4, pour constituer un séquenceur commandant le fonctionnement de l'ensemble du dispositif de décellulisation DD2.

Le microprocesseur MP4 commande les mémoires FI5, HM', et les circuits d'adressage AC3 et AC4 via le bus CB4.

La mémoire FI5 possède une entrée de données reliée au multiplex asynchrone AM4 pour recevoir la charge utile des cellules. En l'occurence, chaque cellule comporte systématiquement 32 octets de données et 16 octets vides dans sa charge utile. Les octets vides ne sont pas inscrits dans la mémoire FI5. La mémoire HM' possède une entrée de données reliée au multiplex AM4 pour détecter l'arrivée de l'une des en-têtes attendues. Cette entrée permettant une comparaison avec chacune des quatre en-têtes attendues. Une sortie de la mémoire HM' fournit un mot binaire indiquant la détection de l'une de ces en-têtes. Cette sortie est reliée à une entrée de commande du circuit d'adressage AC3 pour lui commander de commencer à fournir une suite de 32 adresses, à partir de l'adresse correspondant à l'en-tête détectée. Cette suite d'adresses est appliquée à une entrée d'adresse d'écriture de la mémoire FI5 pour inscrire dans cette mémoire les 32 octets de la charge utile de la cellule dont l'en-tête a été détectée. Cette écriture est réalisée au rythme de 155,52 Mbits/S.

Le circuit d'adressage de lecture AC4 fournit une suite de 128 adresses à une entrée d'adresse de lecture de la mémoire FI5, à un rythme de 8,192 Mbits/S pour lire les 128 octets de charge utile des cellules composites CC1, CC2, CC3, CC4, et constituer ainsi une trame du multiplex synchrone SM2.

## Revendications

**1.** Dispositif de **cellulisation** de voies numériques synchrones, dans des cellules à mode de transfert asynchrone, ces voies synchrones étant supportées par des multiplex synchrones organisés en trames récurrentes ayant une période de trame fixée, et ces trames étant découpées en intervalles de temps ayant des durées fixées, un échantillon de chaque voie étant représenté par un mot binaire placé dans un intervalle de temps occupant une position fixe dans la trame, ces cellules supportant des mots binaires représentant respectivement une pluralité de voies asynchrones différentes ;

 **caractérisé** en ce que ledit dispositif de cellulisation comporte :

- une mémoire d'entrée (IM1) pour stocker les échantillons de toutes les voies synchrones de chaque trame, au fur et à mesure qu'ils sont reçus ;
- des mémoires (CF1,...,CF4) de formation de cellules, qui est lue séquentiellement pour fournir restituer séquentiellement les cellules à des multiplex asynchrones ;
- une mémoire (CI) d'identificateurs de cellule pour mémoriser, pour chaque cellule, au moins :

 -- une en-tête (HD) de cellule attribuée à cette cellule ;
 -- un mot (L) indiquant sur quel multiplex asynchrone cette cellule doit être restituée ;
 -- une adresse initiale de lecture (Kinit) ;
 -- une adresse d'écriture (J');

- une mémoire de marquage (MM) contenant des informations de marquage relatives à la répartition des voies synchrones dans les voies logiques asynchrones ; ces informations étant sous la forme d'une liste de liens ; ladite mémoire de marquage étant lue à une adresse initiale de lecture (Kinit) fournie par la mémoire d'identificateurs de cellules, pour fournir une nouvelle adresse de lecture dans cette mémoire d'entrée (IM1) ; la mémoire de marquage ayant un nombre de pages égal au nombre maximal des cellules qui peuvent être transmises pendant une période de trame, et chaque page aux octets de charge utile d'une cellule ;

- un circuit de commande (CU1) pour transmettre des octets de la mémoire d'entrée (MI1) vers l'une de ces mémoires de formation de cellules (CF1,...,CF4), à des adresses d'écriture (J, K, L) qui sont fournies par la mémoire d'identificateurs de cellule (CI).

2. Dispositif de cellulisation selon la revendication 1, pour commuter et assembler des voies numériques synchrones dans des cellules de longueur **fixe**,

     **caractérisé** en ce que le circuit de commande (CU1) transmet un nombre fixe d'octets de la mémoire d'entrée (IM1) aux mémoires de formation de cellules (CF1,...,CF4), pour former chaque cellule dans ces mémoires de formation de cellules.

3. Dispositif de cellulisation selon la revendication 1, pour commuter et assembler des voies numériques synchrones dans des cellules de longueur **variable**,

     **caractérisé :**

- en ce qu'il comporte des moyens (MP1) pour déterminer la longueur de chaque cellule, et des données de routage, en fonction du trafic à acheminer ;
- le circuit de commande (CU1) transmet un nombre d'octets, correspondant à la longueur déterminée pour une cellule, de la mémoire d'entrée (IM1) aux mémoires de formation de cellules (CF1,...,CF4), pour former cette cellule dans les mémoires de formation de cellules.

4. Dispositif de **décellulisation** de voies numériques synchrones placées dans des cellules à mode de transfert asynchrone, ces cellules supportant des mots binaires représentant respectivement des échantillons d'une pluralité de voies asynchrones différentes ;

     **caractérisé** en ce qu'il comporte :

- une mémoire d'entrée (FI1, ...,FI4) pour stocker toutes les cellules reçues en provenance de voies multiplex asynchrones ;
- des moyens (VC) pour vérifier l'identité de chaque cellule reçue, et en déduire un adresse d'écriture pour cette identité, si cette cellule était attendue, ou pour éliminer l'identité de cette cellule si elle a été reçue à cause d'une erreur ;

- des mémoires (FF1,...,FF64) de formation de trames, fournissant respectivement des trames aux multiplex synchrones, lorsqu'elles sont lues séquentiellement ;
- une mémoire (CI') d'identificateurs de cellules pour mémoriser, pour chaque cellule reçue, et à l'adresse d'écriture fournie par les moyens pour vérifier l'identité , au moins :

  -- une adresse de page (Pi) correspondant à cette cellule reçue,
  -- et une adresse de ligne initiale (Si) dans cette page ;

- une mémoire de marquage (MM') contenant des informations de marquage relative à la répartition des voies synchrones dans les trames synchrones ; ces informations étant sous la forme de listes de liens ; cette mémoire de marquage étant lue à une adresse de ligne initiale (Hinit) fournie par la mémoire (CI') d'identificateurs de cellule, puis à une adresse de lecture (H') fournie par elle-même ; et cette mémoire de marquage fournissant une adresse d'écriture (Pi, Si) ;

- des moyens de commande (CU2) pour lire chaque octet de la charge utile d'une cellule, dans la mémoire d'entrée (FI1,...,FI4), dans l'ordre d'arrivée des cellules, et ensuite l'écrire dans la mémoire (FF1,...,FF64) de formation de trames à l'adresse d'écriture fournie par la mémoire de marquage (MM').

5. Dispositif de décellulisation selon la revendication 4, pour désassembler et commuter des voies numériques synchrones placées dans des cellules à longueur **fixe**, chaque cellule comportant un identificateur de groupe de circuits virtuels et un identificateur de circuit virtuel ;

     **caractérisé** en ce que les moyens (VC) pour vérifier l'identité de chaque cellule prélèvent l'identificateur de groupe de circuits virtuels et l'identificateur de circuit virtuel de chaque cellule reçue, et en déduisent une adresse d'écriture dans la mémoire de la mémoire d'identificateurs de cellules (CI').

6. Dispositif de décellulisation selon la revendication 4, pour désassembler et commuter des voies numériques synchrones placées dans des cellules à longueur **variable**, chaque cellule comportant un étiquette de routage et un indicateur indiquant sa longueur ;

     **caractérisé** en ce que la mémoire d'entrée (FI1,...,FI4) comporte des moyens pour déterminer la fin de chaque cellule, et pour stocker les cellules bout à bout ;

et en ce que les moyens (VC) pour vérifier l'identité de chaque cellule reçue reçoivent des données de routage correspondant à chaque cellule, et déterminent une adresse d'écriture dans la mémoire d'identificateurs de cellules (CI') en fonction de la voie logique correspondant à ces données de routage.

7. **Centre de commutation** de voies numériques **synchrones** (SEo), ces voies synchrones étant supportées par des multiplex synchrones organisés en trames récurrentes ayant une période de trame fixée, et étant découpées en intervalles de temps ayant des durées fixées, un échantillon de chaque voie étant représenté par un mot binaire placé dans un intervalle de temps occupant une position fixe dans la trame;

**caractérisé** en ce qu'il comporte :

- des unités (URe) de raccordement de multiplex synchrones entrants (CPMe n°1, ..., p), comportant un dispositif de cellulisation selon l'une des revendications 1 à 3 ;
- des unités (URs) de raccordement de multiplex synchrones sortants (CPMs n°1, ..., p), comportant chacune un dispositif de décellulisation selon l'une des revendications 4 à 6 ;
- un réseau de connexion (ACN) à mode de transfert asynchrone, établissant des connexions entre les unités de raccordement de multiplex synchrones entrants et les unités de raccordement de multiplex synchrones sortants, pour acheminer les cellules supportant les voies asynchrones.

8. **Centre de commutation** de voies numériques **asynchrones** (AE1), permettant d'acheminer vers d'autres centres de commutation (AE2, SE3, SE2) des cellules produites par un dispositif de cellulisation (CD2), selon l'une des revendications 1 à 3, ces cellules supportant des mots binaires représentant respectivement une pluralité de voies asynchrones différentes; ce centre de commutation (AE1) comportant un réseau de connexion (ATMS) à mode de transfert asynchrone, muni de plusieurs accès pour des voies numériques asynchrones;

et étant **caractérisé** en ce qu'il comporte, relié à l'un de ses accès, des moyens (IWU) pour :

- recevoir des cellules (CC1) supportant des mots binaires représentant respectivement une pluralité de voies synchrones différentes (s1, ..., s32);
- extraire de ces cellules (CC1) les mots binaires qu'elles supportent;
- et placer dans plusieurs cellules distinctes (CS1, CS2, CS3) supportant des voies logiques distinctes les mots binaires extraits représentant respectivement des échantillons de voies synchrones différentes qui ne sont pas susceptibles d'être supportées par une même voie logique.

**Claims**

1. Cell assembly device for assembling synchronous digital channels into asynchronous transfer mode cells, said synchronous channels being conveyed by synchronous multiplexes organized into recurrent frames with a fixed frame period and divided into time slots of fixed duration, a sample of each channel being represented by a binary word placed in a time slot occupying a fixed position in the frame, these cells supporting binary words respectively representing a plurality of different asynchronous channels;
characterized in that said cell assembly device includes:

- an input memory (IM1) for storing the samples of all the synchronous channels of each frame, as and when they are received;
- cell forming memories (CF1, ..., CF4) which are read sequentially to output the cells sequentially to asynchronous multiplexes;
- a cell identifier memory (CI) for storing, for each cell, at least:

-- a cell header (HD) attributed to that cell;
-- a word (L) indicating on which asynchronous multiplex that cell must be output;
-- an initial read address (Kinit);
-- a write address (J');

- a marking memory (MM) containing marking information relating to the distribution of the synchronous channels in the asynchronous logical channels; this information being in the form of a list of links; said marking memory being read at an initial read address (Kinit) supplied by the cell identifier memory, to provide a new read address in that input memory (IM1); the marking memory having a number of pages equal to the maximum number of cells that can be transmitted during a frame period, and each page [lacuna] to the payload bytes of a cell;
- a control circuit (CU1) for transmitting bytes from the input memory (MI1) to one of these cell forming memories (CF1, ..., CF4), at write addresses (J, K, L) which are provided by the cell identifier memory (CI).

2. Cell assembly device according to claim 1, for switching and assembling synchronous digital channels in cells of fixed length,
characterized in that the control circuit (CU1) transmits a fixed number of bytes from the input memory (IM1) to the cell forming memories (CF1, ..., CF4) to form each cell in these cell forming memories.

3. Cell assembly device according to claim 1, for switching and assembling synchronous digital channels in cells of variable length, characterized in that:

   - it includes means (MP1) for determining the length of each cell, and of the routing data, as a function of the traffic to be routed;
   - the control circuit (CU1) transmits a number of bytes corresponding to the determined length of a cell from the input memory (IM1) to the cell forming memories (CF1, ..., CF4) to form that cell in the cell forming memories.

4. Cell disassembly device for disassembling synchronous digital channels placed in asynchronous transfer mode cells, these cells supporting binary words respectively representing samples of a plurality of different asynchronous channels; characterized in that it includes:

   - an input memory (FI1, ..., F14) for storing all the cells received from asynchronous multiplex channels;
   - means (VC) for verifying the identity of each cell received and deducing therefrom a write address for that identity, if that cell was expected, or to eliminate the identity of that cell if it was received because of an error;
   - frame forming memories (FF1, ..., FF64) respectively supplying frames to the synchronous multiplexes, when they are read sequentially;
   - a cell identifier memory (CI') for memorizing, for each cell received, and at the write address provided by the means for verifying the identity, at least:

     -- a page address (Pi) corresponding to that received cell, and
     -- an initial line address (Si) in that page;

   - a marking memory (MM') containing marking information relating to the distribution of the synchronous channels in the synchronous frames; this information being in the form of lists of links; this marking memory being read at an initial row address (Hinit) provided by the cell identifier memory (CI'), then at a read address (H') provided by itself; and this marking memory supplying a write address (Pi, Si);
   - control means (CU2) for reading each byte of the payload of a cell, in the input memory (FI1, ..., FI4), in the order of arrival of the cells, and then writing in the frame forming memory (FF1, ..., FF64) at the write address supplied by the marking memory (MM').

5. Cell disassembly device according to claim 4, for disassembling and switching synchronous digital channels placed in cells of fixed length, each cell including a virtual circuit group identifier and a virtual circuit identifier;
characterized in that the means (VC) for verifying the identity of each cell derive from the virtual circuit group identifier and the virtual circuit identifier of each cell received a write address in the cell identifier memory (CI').

6. Cell disassembly device according to claim 4, for disassembling and switching synchronous digital channels placed in cells of variable length, each cell including a routing label and an indicator indicating its length;
characterized in that the input memory (FI1, ..., FI4) includes means for determining the end of each cell and for storing the cells end to end; and

   - in that the means (VC) for verifying the identity of each cell received receive routing data corresponding to each cell and determine a write address in the cell identifier memory (CI') as a function of the logical channel corresponding to that routing data.

7. Switching centre (SEo) for switching synchronous digital channels conveyed by synchronous multiplexes organized into recurrent frames having a fixed frame period and divided into time slots having fixed durations, a sample of each channel being represented by a binary word placed in a time slot occupying a fixed position in the frame;
characterized in that it includes:

   - access units (URe) for incoming synchronous multiplexes (CPMe n° 1, ..., p) including a cell assembly device according to any one of claims 1 to 3;
   - access units (URs) for outgoing synchronous multiplexes (CPMs n° 1, ..., p) each including a cell disassembly device according to any one of claims 4 to 6;
   - an asynchronous transfer mode switching network (ACN) setting up connections between the incoming synchronous multiplex access units and the outgoing synchronous multiplex access units to route the cells conveying the asynchronous channels.

8. Switching centre (AE1) for switching asynchronous digital channels for routing to other switching centres (AE2, SE3, SE2) cells produced by a cell assembly device (CD2) according to any one of claims 1 to 3, said cells conveying binary words representing respective channels of a plurality of different asynchronous channels; said switching centre (AE1) including an asynchronous transfer mode switching network (ATMS) having a plurality of ports for asynchronous digital channels;

characterized in that it includes, connected to one of its ports, means (IWU) for:

- receiving cells (CC1) conveying binary words representing respective channels of a plurality of different synchronous channels (s1, ..., s32);
- extracting from said cells (CC1) the binary words that they convey; and
- placing in a plurality of separate cells (CS1, CS2, CS3) conveying separate logical channels the extracted binary words representing respective samples of different synchronous channels which may not be conveyed by the same logical channel.

**Patentansprüche**

1. Vorrichtung zur Zellularisierung von synchronen digitalen Kanälen zu Zellen mit asynchronem Übertragungsmodus, wobei diese synchronen Kanäle von synchronen Multiplexen getragen werden, die in rekurrenten Rahmen mit einer festgelegten Rahmenperiode organisiert sind, und wobei diese Rahmen zu Zeitintervallen mit festgelegten Dauern zerschnitten werden, wobei ein Abtastwert jedes Kanals durch ein Binärwort dargestellt wird, das in einem Zeitintervall angeordnet ist, das im Rahmen eine feste Position einnimmt, wobei diese Zellen Binärwörter tragen, die jeweils eine Vielzahl von verschiedenen asynchronen Kanälen darstellten;

dadurch gekennzeichnet, daß die Vorrichtung zur Zellularisierung aufweist:

- einen Eingangsspeicher (IM1) zum Speichern der Abtastwerte aller synchronen Kanäle jedes Rahmen je nachdem, wie sie empfangen werden;
- Speicher (CF1, ..., CF4) zur Bildung von Zellen, der sequentiell gelesen wird, um eine sequentielle Wiederherstellung der Zellen mit asynchronen Multiplexen zu leisten;
- einen Zellennamenspeicher (CI), um für jede Zelle wenigstens zu speichern:

  - einen Zellenkopf (HD), der dieser Zelle zugeordnet ist;
  - ein Wort (L), das angibt, auf welchem asynchronen Multiplex diese Zelle wiederhergestellt werden muß;
  - eine Anfangsleseadresse (Kinit);
  - eine Schreibadresse(J');

- einen Markierungsspeicher (MM), der die Verteilung der synchronen Kanäle in den asynchronen logischen Kanälen betreffende Markierungsinformationen enthält; wobei diese Informationen die Form einer Verbindungsliste haben; wobei der Markierungsspeicher an einer Anfangsleseadresse (Kinit) gelesen wird, die vom Zellennamenspeicher geliefert wird, um eine neue Leseadresse in diesem Eingangsspeicher (IM1) zu liefern; wobei der Markierungsspeicher eine Anzahl von Seiten gleich der maximalen Anzahl der Zellen, die während einer Rahmenperiode übertragen werden können, und jede Seite gleich den Nutzlastoktetts einer Zelle aufweist;
- eine Steuerschaltung (CU1) zum Übertragen der Oktetts vom Eingangsspeicher (MI1) zu einem dieser Speicher (CF1, ..., CF4) zur Bildung von Zellen mit Leseadressen (J, K, L), die vom Zellennamenspeicher (CI) geliefert werden.

2. Zellularisierungsvorrichtung nach Anspruch 1 zum Vermitteln und Zusammensetzen von synchronen digitalen Kanälen zu Zellen mit fester Länge, dadurch gekennzeichnet, daß die Steuerschaltung (CU1) eine feste Anzahl von Oktetts vom Eingangsspeicher (IM1) zu den Speichern (CF1, ..., CF4) zur Bildung von Zellen überträgt, um jede Zelle in diesen Speichern zur Bildung von Zellen zu bilden.

3. Zellularisierungsvorrichtung nach Anspruch 1 zum Vermitteln und Zusammensetzen von synchronen digitalen Kanälen zu Zellen mit variabler Länge, dadurch gekennzeichnet, daß

- sie Mittel (MP1) zum Bestimmen der Länge jeder Zelle und Routingdaten in Abhängigkeit vom zu leitenden Verkehr aufweist;
- die Steuerschaltung (CU1) eine Anzahl von Oktetts, die der bestimmten Länge für eine Zelle entspricht, vom Eingangsspeicher (IM1) zu den Speichern (CF1, ..., CF4) zur Bildung von Zellen überträgt, um diese Zelle in den Speichern zur Bildung von Zellen zu bilden.

4. Vorrichtung zur Dezellularisierung von synchronen digitalen Kanälen, die in Zellen mit asynchronem Übertragungsmodus angeordnet sind, wobei diese Zellen Binärwörter tragen, die jeweils Abtastwerte einer Vielzahl von verschiedenen asynchronen Kanälen darstellen;

dadurch gekennzeichnet, daß sie aufweist:

- einen Eingangsspeicher (FI1, ..., FI4) zum Speichern aller von asynchronen Multiplexkanälen stammenden, empfangenen Zellen;
- Mittel (VC) zum Verifizieren der Identität jeder empfangenen Zelle und Herleiten einer Schreibadresse für diese Identität, wenn diese Zelle erwartet wurde, oder zum Eliminieren der Identität dieser Zelle, wenn sie aufgrund eines Fehlers empfangen wurde;
- Speicher (FF1, ...FF64) zur Bildung von Rahmen, die jeweils Rahmen mit synchronen Multiplexen liefern, wenn sie sequentiell gelesen werden;
- einen Zellennamenspeicher (CI'), um für jede empfangene Zelle und an der von den Mitteln zum Verifizieren der Identität gelieferten Schreibadresse wenigstens zu speichern:

    - eine Seitenadresse (Pi), die dieser empfangenen Zelle entspricht,
    - und eine Anfangszeilenadresse (Si) in dieser Seite;

- einen Markierungsspeicher (MM'), der die Verteilung der synchronen Kanäle in den synchronen Rahmen betreffenden Markierungsinformationen enthält; wobei diese Informationen die Form von Verbindungslisten haben; wobei dieser Markierungsspeicher an einer Anfangszeilenadresse (Hinit), die vom Zellennamenspeicher (CI') geliefert wird, dann an einer Leseadresse (H') gelesen wird, die von ihm selbst geliefert wird; und wobei dieser Markierungsspeicher eine Schreibadresse (Pi, Si) liefert;
- Steuermittel (CU2) zum Lesen jedes Oktetts der Nutzlast einer Zelle im Eingangsspeicher (FI1, ..., FI4) in der Reihenfolge der Ankunft der Zellen und anschließendem Schreiben in den Speicher (FF1, ..., FF64) zur Bildung von Rahmen an der vom Markierungsspeicher (MM') gelieferten Schreibadresse.

5. Dezellularisierungsvorrichtung nach Anspruch 4 zum Zerlegen und Vermitteln von synchronen digitalen Kanälen, die in Zellen mit fester Länge angeordnet sind, wobei jede Zelle einen Namen für eine Gruppe von virtuellen Schaltungen und einen Namen für eine virtuelle Schaltung aufweist; dadurch gekennzeichnet, daß die Mittel (VC) zum Verifizieren jeder Zelle den Namen für eine Gruppe von virtuellen Schaltungen und den Namen einer virtuellen Schaltung jeder empfangenen Zelle abnehmen und daraus eine Schreibadresse im Speicher des Zellennamenspeichers (CI') herleiten.

6. Dezellularisierungsvorrichtung nach Anspruch 4 zum Zerlegen und Vermitteln von synchronen digitalen Kanälen, die in Zellen mit variabler Länge angeordnet sind, wobei jede Zelle eine Routingmarke und ein Kennzeichen aufweist, das ihre Länge angibt; dadurch gekennzeichnet, daß der Eingangsspeicher (FI1, ..., FI4) Mittel zum Bestimmen des Endes jeder Zelle und zum Speichern der Zellen Ende an Ende aufweist; und daß die Mittel (VC) zum Verifizieren der Identität jeder empfangenen Zelle Routingdaten empfangen, die jeder Zelle entsprechen, und eine Schreibadresse im Zellennamenspeicher (CI') in Abhängigkeit vom logischen Kanal bestimmen, der diesen Routingdaten entspricht.

7. Vermittlungszentrum für synchrone digitale Kanäle (SEo), wobei diese synchronen Kanäle von synchronen Multiplexen getragen werden, die in rekurrenten Rahmen mit einer festgelegten Rahmenperiode organisiert und in Zeitintervalle mit festgelegten Dauern zerschnitten sind, wobei ein Abtastwert jedes Kanals durch ein Binärwort dargestellt wird, das in einem Zeitintervall angeordnet ist, das eine feste Position im Rahmen einnimmt; dadurch gekennzeichnet, daß es aufweist:

- Anschlußeinheiten (URe) für eingehende synchrone Multiplexe (CPMe Nr. 1, ..., p), die eine Zellularisierungsvorrichtung nach einem der Ansprüche 1 bis 3 aufweisen;
- Anschlußeinheiten (URs) für abgehende synchrone Multiplexe (CPMs Nr. 1, ..., p), die jeweils eine Dezellularisierungsvorrichtung nach einem der Ansprüche 4 bis 6 aufweisen;
- ein Verbindungsnetz (ACN) mit asynchronem Übertragungsmodus, das Verbindungen zwischen den Anschlußeinheiten für eingehende synchrone Multiplexe und den Anschlußeinheiten für abgehende synchrone Multiplexe einrichtet, um die die asynchronen Kanäle tragenden Zellen zu leiten.

8. Vermittlungszentrum (AE1) für asynchrone digitale Kanäle, das gestattet, von einer Zellularisierungsvorrichtung (CD2) nach einem der Ansprüche 1 bis 3 erzeugte Zellen zu anderen Vermittlungszentren (AE2, SE3, SE2) zu leiten, wobei diese Zellen Binärwörter tragen, die jeweils eine Vielzahl von verschiedenen asynchronen Kanälen darstellen; wobei dieses Vermittlungszentrum (AE1) ein Verbindungsnetz (ATMS) mit asynchronem Übertragungsmodus aufweist, das mit mehreren Zugängen für asynchrone digitale Kanäle versehen ist; und dadurch gekennzeichnet, daß es mit einem seiner Zugänge verbunden Mittel (IWU) umfaßt, um:

- Zellen (CC1) zu empfangen, die Binärwörter tragen, die jeweils eine Vielzahl von verschiedenen synchronen Kanälen (s1, ..., s32) darstellen;

**EP 0 609 137 B1**

- die Binärwörter aus diesen Zellen (CC1), die sie tragen, herauszuziehen;
- und die herausgezogenen Binärwörter, die jeweils Abtastwerte von verschiedenen synchronen Kanälen darstellen, die nicht geeignet sind, vom selben logischen Kanal getragen zu werden, in mehreren getrennten Zellen (CS1, CS2, CS3), die mehrere logische Kanäle tragen, anzuordnen.

# FIG.1

EP 0 609 137 B1

# FIG. 2

# FIG. 3

FIG.4

EP 0 609 137 B1

28

# FIG. 5

FIG.6

# FIG.7

# FIG.8

# FIG.9

EP 0 609 137 B1

# FIG.10

EP 0 609 137 B1

# FIG.11

EP 0 609 137 B1

# FIG.12

EP 0 609 137 B1

EP 0 609 137 B1

# FIG.13